(19) Europäisches Patentamt / European Patent Office / Office européen des brevets

(11) **EP 2 756 595 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(21) Anmeldenummer: **12769601.1**

(22) Anmeldetag: **10.09.2012**

(51) Int Cl.:
*H02P 21/14* (2016.01)          *H02P 6/18* (2016.01)
*G06Q 10/04* (2012.01)        *H02P 6/185* (2016.01)
*H02P 21/18* (2016.01)

(86) Internationale Anmeldenummer:
**PCT/EP2012/003793**

(87) Internationale Veröffentlichungsnummer:
**WO 2013/037472 (21.03.2013 Gazette 2013/12)**

(54) **VERFAHREN ZUM BESTIMMEN DES ROTORWINKELS EINER SYNCHRONMASCHINE UND ANTRIEB ZUR DURCHFÜHRUNG DES VERFAHRENS**

METHOD FOR DETERMINING THE ROTOR ANGLE OF A SYNCHRONOUS MACHINE AND DRIVE FOR CARRYING OUT THE METHOD

PROCÉDÉ DE DÉTERMINATION DE L'ANGLE DU ROTOR D'UNE MACHINE SYNCHRONE ET SYSTÈME D'ENTRAÎNEMENT POUR LA MISE EN OEUVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2011   DE 102011113337**

(43) Veröffentlichungstag der Anmeldung:
**23.07.2014   Patentblatt 2014/30**

(73) Patentinhaber: **Sew-Eurodrive GmbH & Co. KG 76646 Bruchsal (DE)**

(72) Erfinder:
• **WOLF, Harald**
**76698 Ubstadt-Weiher (DE)**
• **HAMMEL, Wolfgang**
**76646 Bruschsal (DE)**

(56) Entgegenhaltungen:
**WO-A2-2011/026578     DE-A1- 10 226 974**

• **WOLFGANG HAMMEL ET AL: "Position sensorless control of PMSM by synchronous injection and demodulation of alternating carrier voltage", SENSORLESS CONTROL FOR ELECTRICAL DRIVES (SLED), 2010 FIRST SYMPOSIUM ON, IEEE, PISCATAWAY, NJ, USA, 9. Juli 2010 (2010-07-09), Seiten 56-63, XP031728017, ISBN: 978-1-4244-7035-8**
• **WOLFGANG HAMMEL ET AL: "High-resolution sensorless position estimation using delta-sigma-modulated current measurement", ENERGY CONVERSION CONGRESS AND EXPOSITION (ECCE), 2011 IEEE, IEEE, 17. September 2011 (2011-09-17), Seiten 2717-2724, XP032067527, DOI: 10.1109/ECCE.2011.6064133 ISBN: 978-1-4577-0542-7**
• **WILHELM PETERS ET AL: "Regular-sampled current measurement in AC drives using delta-sigma modulators", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-9, XP031541731, ISBN: 978-1-4244-4432-8**

**Beschreibung**

Die Erfindung betrifft ein Verfahren zum Bestimmen des Rotorwinkels einer Synchronmaschine.

Aus der US2006/0091845 A1 ist zur geberlosen Bestimmung der Winkellage des Rotors eines Synchronmotors mit in Umfangsrichtung anisotroper Statorinduktivität bekannt, ein Testsignal auf einen Grundwellenanteil einer vom den Synchronmotor speisenden Umrichter zu stellenden Motorspannung aufzumodulieren. Aus dem erfassten Motorstromwerteverlauf lässt sich dann beispielsweise durch Filterung, insbesondere Hochpass-, Bandpass- und/oder Tiefpass-Filterung, der Grundwellenanteil des Stromes vom höher frequenten Anteil des Stromes trennen und aus dem höher frequenten Anteil die Motorposition bestimmen.

Aus der DE 102 26 974 A1 ist als nächstliegender Stand der Technik ein Verfahren zur Bestimmung einer Rotorlage einer feldorientiert betriebenen Drehfeldmaschine ohne mechanischen Sensor bekannt.

Aus der Veröffentlichung WOLFGANG HAMMEL ET AL:"Position sensorless control of PMSM by synchronous injection and demodulation of alternating carrier voltage", SENSORLESS CONTROL FOR ELECTRICAL DRIVES (SLED), 2010 FIRST SYMPOSIUM ON, IEEE, PISCATAWAY, NJ, USA, 9. Juli 2010, Seiten 56-63, XP 031728017, ISBN: 978-1-4244-7035-8, ist eine geberlose Erfassung der Rotorwinkellage bekannt, die auf der Anisotropie der Statorinduktivität basiert.

Aus der nach der frühesten Priorität der Erfindung veröffentlichten Publikation WOLFGANG HAMMEL ET AL:"High-resolution sensorless position estimation using delta-sigma-modulated current measurement",ENERGY CONVERSION CONGRESS AND EXPOSITION (ECCE), 2011 IEEE, IEEE, 17. September 2011, Seiten 2717-2714, XP 032067527, ISBN: 978-1-4577-0542-7, ist ebenfalls eine geberlose Erfassung der Rotorwinkellage bekannt, die auf der Anisotropie der Statorinduktivität basiert

Aus der Veröffentlichung WILHERLM PETERS ET AL:"Regular-sampled current measurement in AC drives using delta-sigma modulators", 13TH EUROPEAN CONFERENCE ON POWER ELECTRONICS AND APPLICATIONS, 2009: EPE'09; 8 - 10SEPT. 2009 BARCELONA, SPAIN, IEEE, PSCATAWAY, NJ, USA, 8. September 2009, Seiten 1-9, XP031541731, ISBN: 978-1-4244-4432-8 sind Delta-Sigma-Wandler bekannt, die bei der Stromerfassung verwendet werden.

Der Erfindung liegt daher die Aufgabe zugrunde, eine geberlose Regelung eines Synchronmotors weiterzubilden, insbesondere für einen Synchronmotor, der nur geringfügig anisotrope Eigenschaften aufweist.

Erfindungsgemäß wird die Aufgabe bei dem Verfahren zum Bestimmen des Rotorwinkels einer Synchronmaschine nach den in Anspruch 1 angegebenen Merkmalen gelöst.

Wichtige Merkmale der Erfindung bei dem Verfahren zum Bestimmen des Rotorwinkels einer Synchronmaschine, insbesondere unter Ausnutzung nur eines einzigen zwei- oder dreikomponentigen Strommesskanals, insbesondere wobei die Synchronmaschine eine rotorstellungsabhängige Statorinduktivität, und/oder eine in Umfangsrichtung anisotrop verlaufende Statorinduktivität aufweist, sind,

dass ein Wechselrichter den Stator der Synchronmaschine mit einer pulsweitenmodulierten Drehspannung speist, welche für jede Hälfte einer Pulsweitenmodulationsperiode durch jeweils einen Spannungsraumzeiger kennzeichenbar ist, wobei der Motorstrom erfasst wird und daraus ein zugehöriger Motorstromraumzeiger gebildet wird und zumindest davon abhängig der Spannungsraumzeiger zumindest für eine jeweilige Pulsweitenmodulationsperiode bestimmt wird, wobei der Spannungsraumzeiger aus einem zu einem Grundwellenanteil zugehörigen Anteil und aus einem zu einem im Vergleich zum Grundwellenanteil höher frequenten Trägersignal zugehörigen Anteil zusammengesetzt wird,

**wobei** das Trägersignal als periodisches Signal ausgeführt ist, dessen Periodendauer ein ganzzahliges Vielfaches der Pulsweitenmodulationsperiode beträgt, insbesondere mindestens dem Zweifachen oder Dreifachen der Pulsweitenmodulationsperiode gleicht,

wobei das Trägersignal ein binäres Signal ist und/oder wobei das Trägersignal nur zwei binäre Zustände aufweist, welche jeweils für mindestens eine halbe Pulsweitenmodulationsperiode aufrechterhalten bleiben,

wobei das Trägersignal ein Muster aufweist, das Mittelwert-frei ist, insbesondere bei Mittelwertbildung über die Periodendauer des Trägersignals,

wobei das Trägersignal eindeutig kennzeichenbar ist, indem jeder Hälfte einer Pulsweitenmodulationsperiode jeweils ein Spannungswert zugeordnet ist,

wobei der Grundwellenanteil des Spannungsraumzeigers während der Periodendauer des Trägersignals konstant ist, wobei aus den erfassten Stromwerten der dem Grundwellenanteil zugeordnete Stromanteil und der dem Trägersignal zugeordnete Stromanteil bestimmt wird,

wobei die erfassten Stromwerte jeweils gemittelt werden über eine Pulsweitenmodulationsperiode und auch gemittelt werden über eine jeweilige Hälfte einer Pulsweitenmodulationsperiode, wobei bei der Mittelwertbildung eine Gewichtsfunktion verwendet wird, deren zeitlicher Verlauf jeweils spiegelsymmetrisch zur Mitte desjenigen Intervalls verläuft, über welches der Mittelwert gebildet wird,

wobei bei der Mittelwertbildung eine Gewichtsfunktion verwendet wird, deren zeitlicher Verlauf jeweils spiegelsymmetrisch zur Mitte desjenigen Intervalls verläuft, über welches der Mittelwert gebildet wird,

wobei als Muster die Vorzeichenfolge, also die Folge der binären Zustände:

(-, -, +, +, +, -, -, +)

verwendet ist.

Von Vorteil ist dabei, dass eine winkelsensorlose, also geberlose, Bestimmung der Winkellage des Rotors eines Synchronmotors mit in Umfangsrichtung anisotroper Statorinduktivität ausführbar ist, wobei ein Testsignal auf einen Grundwellenanteil einer vom den Synchronmotor speisenden Umrichter zu stellenden Motorspannung aufmoduliert wird. Aus dem erfassten Motorstromwerteverlauf lässt sich erfindungsgemäß der Grundwellenanteil des Stromes und der höher frequente Anteil des Stromes schnell und einfach bestimmen, insbesondere durch bloße Addition von gewichteten Strommesswerten, und aus dem höher frequenten Anteil die Motorposition bestimmen.

Die Bestimmung des Grundwellenanteils des Stromes ermöglicht die Verwendung eines prognostizierten Stromwertes bei der Regelung, also die Verwendung eines zum Zeitpunkt der Berechnung eines neu zu stellenden Spannungsraumzeigers aktuelleren Strom-Istwertes. Auf diese Weise ist also eine verbesserte Strom-Regelung ausführbar, da zur Bestimmung des für den nächsten zeitdiskreten Zyklus zu stellenden Spannungsraumzeigers ein zeitgleicher Prognosewert für den Ist-Stromraumzeiger verwendbar ist.

Die hier genannten Raumzeiger rotieren mit der elektrischen Drehfrequenz der Synchronmaschine bei stationärem Betrieb.

Vorteilig ist bei der Erfindung auch, dass besonders die in der industriellen Nutzung weitverbreiteten Synchronmotoren verwendbar sind, obwohl sie mit oberflächenmontierten Magneten nur geringe Anisotropieen aufweisen und die Positionsabhängigkeit der hochfrequenten Stromkomponente demzufolge sehr gering ist. Erfindungsgemäß werden die hochfrequenten Stromanteile mit sehr hoher Auflösung und einem besonders hohen Signal-Rausch-Abstand gemessen, um eine Positionsinformation zu gewinnen, die ebenfalls einen hohen Signal-Rauschabstand aufweist. Hierzu besonders vorteilhaft sind Delta-Sigma-Wandler, denen die erfassten Strommesswerte zugeführt werden.

Erfindungsgemäß werden die erfassten Stromwerte gemittelt über eine Pulsweitenmodulationsperiode und auch gemittelt über eine jeweilige Hälfte einer Pulsweitenmodulationsperiode, insbesondere wobei bei der Mittelwertbildung eine Gewichtsfunktion verwendet wird, deren zeitlicher Verlauf jeweils spiegelsymmetrisch zur Mitte desjenigen Intervalls verläuft, über welches der Mittelwert gebildet wird,

insbesondere wobei die Gewichtsfunktion in der ersten Hälfte, insbesondere Symmetriehälfte, des Intervalls monoton ansteigt und in der zweiten Hälfte monoton abfällt. Von Vorteil ist dabei, dass Störsignale eliminierbar sind, welche durch Schaltflanken des die den Motor speisende Spannung stellenden Wechselrichters verursacht werden.

Bei einer vorteilhaften Ausgestaltung gleicht die Periodendauer des Trägersignals dem Vierfachen der Pulsweitenmodulationsperiode. Dabei ist der Grundwellenanteil zwar nur im Takt der Vierfachen PWM-Periode steuerbar. Von Vorteil ist dabei allerdings, dass mittels der auf die erfindungsgemäße Weise ermöglichten Erfassung der Winkellage die Winkellage des Rotors sehr genau ermittelbar ist. Daher verbessern sich hierdurch die Regeleigenschaften entsprechend einem Antrieb mit Winkelsensor. Insgesamt werden so bessere Regeleigenschaften erreichbar als bei einer Steuerbarkeit des Grundwellenanteils im Takt der PWM-Periode. Des Weiteren zeigt die auf erfindungsgemäße Art gewonnene Positionsinformation auch bei dynamischen Drehmomentänderungen keine störenden Einflüsse, wie dies bei den dem Stand der Technik entsprechenden Verfahren unter Verwendung einer Tiefpass-Bandpass-Kombination der Fall ist. [A. Consoli, A. Gaeta, G. Scarcella, G. Scelba, and A. Testa, "Optimization of Transient Operations in Sensorless Control Techniques Based on Carrier Signal Injection," in Proc. IEEE Energy Conversion Congress and Exposition, San Jose, Sept. 20-24, 2009, pp. 2115-2122.]

Bei einer vorteilhaften Ausgestaltung ist das Pulsweitenmodulationsverfahren ein symmetrisches Pulsweitenmodulationsverfahren,

so dass bei gleicher zu modulierender Spannung in der ersten und zweiten Hälfte der Pulsweitenmodulationsperiodendauer symmetrisch zur Mitte der Pulsweitenmodulationsperiode liegende Schaltvorgänge entstehen. Insbesondere liegt in jeder der Hälften nur ein Schaltvorgang vor, also eine Schaltflanke. Darüber hinaus nutzt das Verfahren die Möglichkeit, um in der ersten und zweiten Hälfte verschiedene Spannungen zu modulieren, also einen jeweiligen Schaltzeitpunkt zu der in der jeweiligen Hälfte vorgegebenen Spannung zu bestimmen. Von Vorteil ist dabei, dass die Injektionsperiodendauer möglichst kurz haltbar ist. Außerdem ist der hochfrequente Anteil im Takt der halben Periodendauer auflösbar, also für den hochfrequenten Anteil die doppelte Pulsweitenmodulationsfrequenz verwendbar ist und somit eine verbesserte Erfassung des aufmodulierten Anteils ermöglicht ist.

Bei einer vorteilhaften Ausgestaltung ist das Trägersignal-Muster derart gewählt, dass das Signal-Rausch-Verhältnis bei der Bestimmung des Grundwellenanteils und des Trägersignals möglichst groß ist,

insbesondere wobei das Muster derart aus allen möglichen binären Mustern mit gleicher Periodendauer und gleicher Stützstellenanzahl innerhalb der Periodendauer gewählt wird, dass bei der Bestimmung der das Trägersignal und den Grundwellenanteil bestimmenden Parameter das Signal-Rausch-Verhältnis maximal ist. Von Vorteil ist dabei, dass eine besonders effektive und hochaufgelöste Bestimmung der Rotorstellung erreicht wird.

Bei einer vorteilhaften Ausgestaltung weist das binäre Muster in jeder Hälfte der Pulsweitenmodulationsperiodendauer einen einzigen unabhängigen Wert auf

und/oder das binäre Muster ist jeweils durch einen einzigen binären Zustandswert pro Pulsweitenmodulationsperiodenhälfte eindeutig darstellbar und/oder beschrieben. Von Vorteil ist dabei, dass das Muster einfach herstellbar und deutlich erkennbar ist, insbesondere der durch das Muster bewirkte Stromanteil deutlich erkennbar ist.

Bei einer vorteilhaften Ausgestaltung wird zur Stromerfassung, insbesondere mit nachfolgender Mittelwertbildung, ein Delta-Sigma-Wandler verwendet, welcher einen Datenstrom erzeugt, dessen zeitlicher Mittelwert mit dem Strommesswert korrespondiert und/oder dem erfassten und als Analogwert dargestellten Strommesswert entspricht. Von Vorteil ist dabei, dass ein besonders hohes Signal-Rausch-Verhältnis erreichbar ist.

Bei einer vorteilhaften Ausgestaltung wird das Ausgangssignal des Delta-Sigma-Wandlers einem Mittel zur mit einer Gewichtsfunktion gewichteten Mittelwertbildung zugeführt, wobei der Mittelwert in einem Zeitabschnitt gebildet wird, der einer Pulsweitenmodulationsperiode oder einer Hälfte einer Pulsweitenmodulationsperiode entspricht,

insbesondere wobei zu einer Pulsweitenmodulationsperiode der mit der Gewichtsfunktion gewichtete Mittelwert bestimmt wird und auch zu beiden Hälften der Pulsweitenmodulationsperiode der mit der Gewichtsfunktion gewichtete Mittelwert bestimmt wird,

insbesondere wobei aus den gewichteten Mittelwerten mittels einer linearen Operation der Grundwellenanteil und/oder der aufmodulierte Stromanteil bestimmt wird. Von Vorteil ist dabei, dass Störeinflüsse eliminierbar sind.

Bei einer vorteilhaften Ausgestaltung wird ein linearer und ein quadratischer Anteil des Stromverlaufs des Grundwellenanteils berücksichtigt. Von Vorteil ist dabei, dass eine verbesserte Prädiktion des Stromverlaufs ermöglicht ist, wodurch auch bei einer in Abhängigkeit des Statorstromes sättigenden Induktivität der auf das Ende des Regelintervalls prädiktierte Grundwellenstromwert sehr exakt ist.

Bei einer vorteilhaften Ausgestaltung ist die zeitliche Diskretisierung des Musters derart gewählt, dass jeder Pulsweitenmodulationsperiode oder jeder Hälfte einer Pulsweitenmodulationsperiode ein, insbesondere ein einziger, Wert des Musters zugeordnet ist,

und/oder dass

die Periodendauer des Musters ein ganzzahliges Vielfaches einer Pulsweitenmodulationsperiode oder einer Hälfte einer Pulsweitenmodulationsperiode ist. Von Vorteil ist dabei, dass eine hohe Auflösung des aufmodulierten Anteils erreichbar ist und gleichzeitig eine analytische Demodulation und Separation des hochfrequenten Stromanteils vom Grundwellenstromanteil ermöglicht wird. Dadurch wird es ermöglicht, dass der gewonnene hochfrequente Stromanteil auch bei dynamischen Drehmomentänderungen nur sehr geringfügig gestört wird.

Wichtige Merkmale bei dem Antrieb zur Durchführung eines vorgenannten Verfahrens sind, dass der Antrieb eine von einem Wechselrichter gespeiste Synchronmaschine aufweist, **wobei** der Motorstrom für zumindest zwei Motorphasen erfasst wird, insbesondere wobei kein Winkelsensor zur Erfassung der Winkellage des Rotors der Synchronmaschine verwendet ist. Von Vorteil ist dabei, dass ein geberloses Regeln einer Synchronmaschine mit geringem Aufwand und mit sehr guten Regeleigenschaften ermöglicht ist.

Bei einer vorteilhaften Ausgestaltung ist jeder Motorphase höchstens ein einziger Strommesskanal zugeordnet. Von Vorteil ist dabei, dass die Stromerfassung mit nur geringem Aufwand betrieben werden muss. Erfindungsgemäß werden die erfassten Stromsignale jeweils zwei verschiedenen gewichteten Mittelwertbildungen unterworfen, wovon die erste einer gewichteten Mittelwertbildung über eine Pulsweitenmodulationsperiodendauerhälfte und die andere einer gewichteten Mittelwertbildung über eine Pulsweitenmodulationsperiodendauer entspricht.

Bei einer vorteilhaften Ausgestaltung weisen die Mittel zur Stromerfassung einen Delta-Sigma-Wandler auf. Von Vorteil ist dabei, dass ein sehr hohes Signal-Rausch-Verhältnis erreichbar ist.

Weitere Vorteile ergeben sich aus den Unteransprüchen.

Kurzfassung des Ausführungsbeispiels:

Die Erfindung löst die Aufgabe, eine geberlose Regelung bei einem Synchronmotor zu erreichen.

Der pulsweitenmoduliert betriebene Wechselrichter stellt dem Motor eine Spannung zur Verfügung, die einen langsam veränderlichen Grundwellenanteil und ein überlagertes höher frequentes Trägersignal aufweist.

Der Grundwellenanteil dient der Drehmomenterzeugung, wobei der entsprechende Spannungsanteil sich nur nach jeweils einer Zeitdauer von $T_{Ctrl}$ ändern darf, wobei die Zeitdauer $T_{Ctrl}$ der Länge von beispielsweise vier Pulsweitenmodulationsperioden gleicht. Die Regelung des Drehmoments erfolgt also nur im Zeittakt von $T_{Ctrl}$ nicht im schnelleren Takt der Pulsweitenmodulationsperiodendauer.

Das auf den Grundwellenanteil addierte Trägersignal ermöglicht die Rotorwinkellagenbestimmung, wobei die Anisoptropie der Statorinduktivität ausgenutzt wird. Der Spannungsanteil des Trägersignals darf sich beispielsweise jede halbe PWM-Periode ändern und folgt innerhalb $T_{ctrl}$ einem besonderen Muster.

Da der Regelung der von ihr bestimmte (Grundwellen)-Spannungsanteil zur Drehmomenterzeugung bekannt ist und auch das Muster, also der Spannungsanteil des aufaddierten Trägersignals, ist ihr die vom Wechselrichter im Zeitabschnitt $T_{Ctrl}$ zu stellende Spannung also wohlbekannt.

Der Strom wird erfasst, wobei die Erfindung eine Trennung des zum Grundwellenanteil gehörenden Stromanteils und des zum Trägersignal gehörenden Stromanteils ermöglicht. Dies gelingt dadurch, dass bekannt ist, dass die Parameter der beiden Stromanteile linear (Matrix-Gleichung) mit Strommesswerten zusammenhängen, die dadurch erhalten werden, dass der erfasste Strom gemittelt wird über jeweils eine halbe PWM-Periode oder über jeweils eine ganze PWM-Periode.

Dieser lineare Zusammenhang ist nur bei Verwendung des besonderen Trägersignal-Musters eines jeweiligen erfindungsgemäßen Ausführungsbeispiels mathematisch eindeutig auflösbar, so dass aus den (über eine halbe bzw. ganze) PWM-Periode gemittelten Strommesswerten die Parameter der beiden Stromanteile bestimmbar sind.

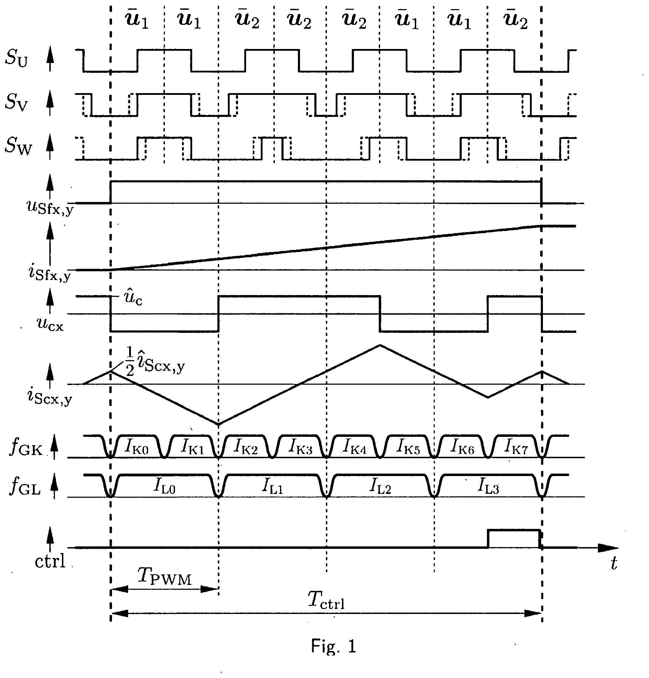

Figur 1 zeigt den Verlauf des Grundwellenanteils $u_{Sf}$ und den zugehörigen Stromanteil $i_{Sfx,y}$, der im Folgenden bis zur 2. Ordnung taylorentwickelt dargestellt wird.

Figur 1 zeigt auch das aufmodulierte Trägersignal $u_{cx}$, das dem besonderen Muster folgt. Dieses Muster, also die Vorzeichenfolge (-, -, +, +, +, -, -, +), ermöglicht die eindeutige Invertierbarkeit des linearen Zusammenhangs. Figur 1 zeigt auch den zugehörigen Strom $i_{Sc}$.

Figur 1 zeigt untenstehend die kurzen Intervalle $I_{K0}$ ...$I_{K7}$, welche einer halben PWM-Periodendauer entsprechen, und längere Intervalle $I_{L0}$ ... $I_{L3}$, welche einer ganzen PWM-Periodendauer entsprechen. Für jedes Intervall ist eine Gewichtungsfunktion gezeigt, also kein Stromverlauf. Diese Gewichtungsfunktionen werden verwendet um den jeweils zugehörigen gewichteten Strom zu bestimmen.

Die Erfindung lehrt, dass der erfasste Stromverlauf über die kurzen oder über die langen Intervalle gemittelt wird und aus diesen Mittelwerten des erfassten Motorstroms der Grundwellenanteil des Stroms und der Stromanteil des Trägersignals ermittelt wird.

Die Erfindung wird nun anhand von Abbildungen im Einzelnen näher erläutert:

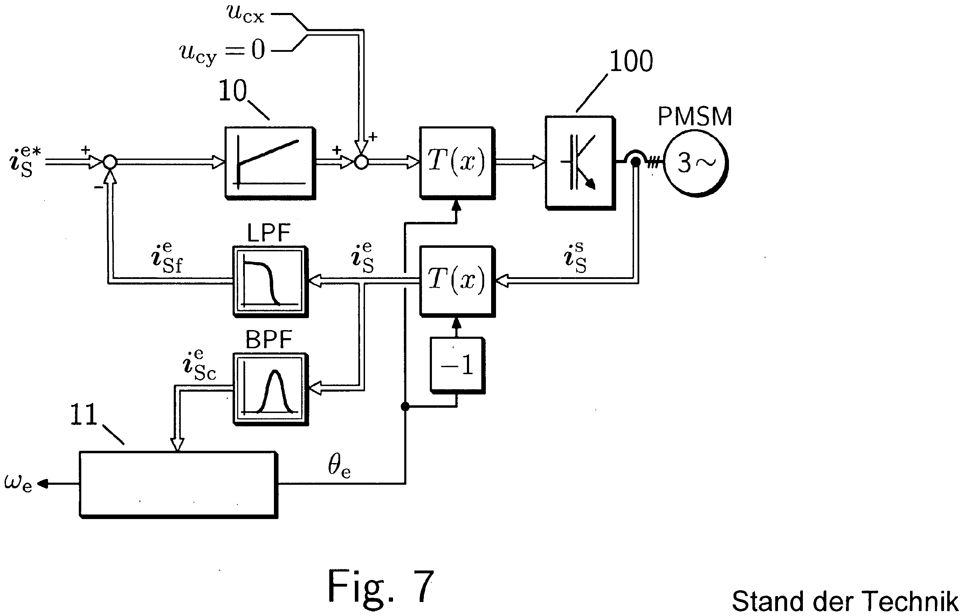

In Figur 7 wird ein Verfahren entsprechend dem Stand der Technik dargestellt, bei dem auf die vom Stromregler 10 bestimmte und somit vom Umrichter 100 zu stellende Spannung ein Spannungsanteil $u_{cx}$, also x-Komponente des Trägeranteils der Statorspannung, aufmoduliert wird und aus dem erfassten Strom mittels Tiefpassfilter LPF der Grundwellenanteil und mittels Bandpassfilter BPF der durch den höher frequenten, aufmodulierte Spannungsanteil bewirkte Stromanteil erfasst wird. Allerdings ergeben sich durch die Filter (LPF, BPF) Zeitverzögerungen, die sich auf die Regeleigenschaften des Umrichters auswirken. Des Weiteren weisen die Ausgangssignale der Filter bei dynamischen Drehmomentänderungen störende Ausgleichsvorgänge auf, welche die Regelung negativ beeinflussen.

In der Figur 1 sind das erfindungsgemäße Pulsmuster eines aufmodulierten Spannungsanteils $u_{cx}$ sowie die zugeordneten Strom- und Spannungsverläufe gezeigt. Die in Figur 1 gezeigten Stromverläufe sind zur Verbesserung der Übersichtlichkeit ohne einen durch die Pulsweitenmodulation verursachten Stromripple dargestellt, der jedoch in Wirklichkeit vorhanden ist. Dieser Stromripple wird aber durch das erfindungsgemäße Verfahren berücksichtigt und aus den zu bestimmenden Stromkomponenten eliminiert. In Figur 1 ist somit in der Reihenfolge von oben nach unten der Verlauf

- einer Komponente (x, y) des Grundwellenanteils $u_{Sf}$ der Statorspannung,
- einer Komponente (x, y) des Grundwellenanteils $i_{Sf}$ des Statorstromes,
- die nicht verschwindende x-Komponente des Trägeranteils $u_{cx}$ der Statorspannung,
- einer Komponente (x, y) des Trägeranteils $i_{SC}$ des Statorstromes,
- eine Gewichtsfunktion $f_{GK}$ zur Bildung der gewichteten Mittelwerte des Stromverlaufs in den kurzen Intervallen $I_{K0}$ bis $I_{K7}$,
- eine Gewichtsfunktion $f_{GL}$ zur Bildung der gewichteten Mittelwerte des Stromverlaufs in den kurzen Intervallen $I_{L0}$ bis $I_{L3}$,
- die Rechenaktivität ctrl zur Bestimmung der Rotorwinkelposition

dargestellt.

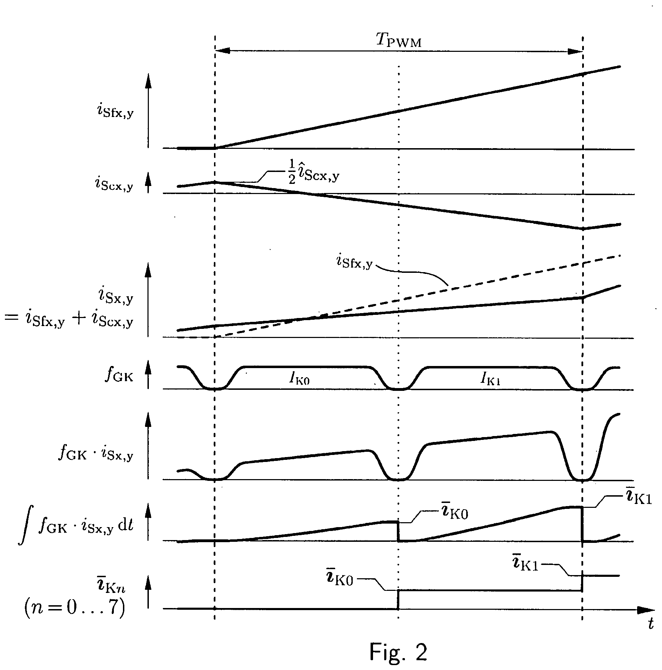

In der Figur 2 ist für das erste lange Intervall $I_{L0}$, welches eine Pulsweitenmodulationsperiodendauer $T_{PWM}$ andauert, der Verlauf

- einer Komponente (x, y) des Grundwellenanteils des Statorstroms $i_{Sf}$,
- einer Komponente (x, y) des Trägeranteils des Statorstroms $i_{Sc}$,
- einer Komponente (x, y) des Statorstroms $i_s$,
- einer Gewichtsfunktion $f_{GK}$ zur Bildung der gewichteten Mittelwerte des Stromverlaufs in den kurzen Intervallen $I_{K0}$ und $I_{K1}$,
- des Produktes aus der Gewichtsfunktion $f_{GK}$ mit der Statorstromkomponente,
- des über das jeweilige kurze Zeitintervall bestimmten Integrals des Produktes aus der Gewichtsfunktion $f_{GK}$ mit der Statorstromkomponente

- der Werte der für das jeweilige kurze Zeitintervall bestimmten Integrale.

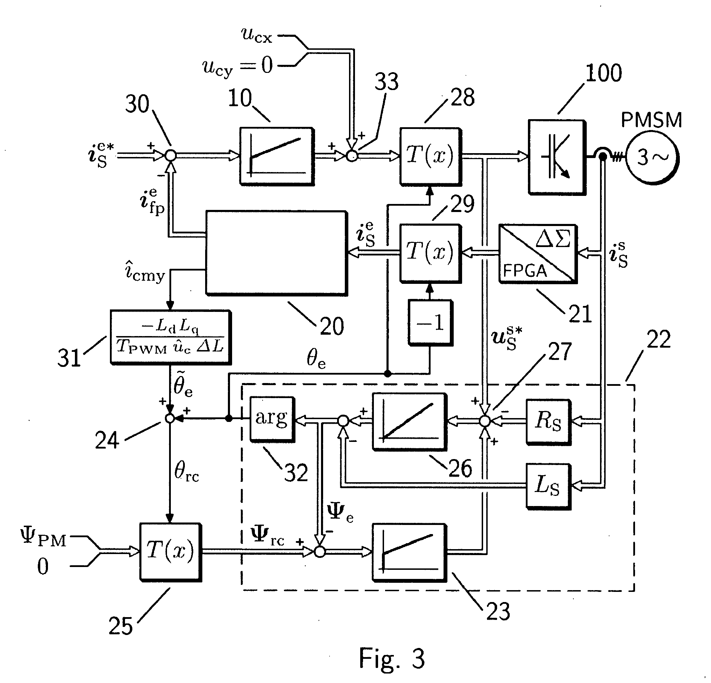

In der Figur 3 ist ein erfindungsgemäßes Regelverfahren schematisch dargestellt.

Der erfindungsgemäße elektrische Antrieb weist einen Synchronmotor PMSM auf, der Statorwicklungen und einen drehbar gelagerten Rotor aufweist. Auf dem Rotor sind Dauermagneten angeordnet, wobei die Anordnung beziehungsweise das zugehörige Magnetfeld nicht rotationssymmetrisch sind, also der Motor, insbesondere der Rotor, in Umfangsrichtung nicht homogen aufgebaut ist.

Bei der Erfindung wird diese Inhomogenität ausgenutzt zur geberlosen Bestimmung der Winkellage des Rotors des Synchronmotors PMSM.

Die Inhomogenität entspricht also einer anisotropen rotorstellungsabhängigen Statorinduktivität.

Der Motor, insbesondere dessen Statorwicklungen, ist vorzugsweise als dreiphasiger Drehstrommotor (3~), ausgeführt und wird von einem Wechselrichter 100 gespeist, der von einer Signalelektronik pulsweitenmoduliert angesteuert wird. Somit stellt der Wechselrichter 100 dem Motor PMSM eine Drehspannung zur Verfügung, die als Drehspannungsraumzeiger ($u_{Sfx}$, $u_{Sfy}$) darstellbar ist. In Figur 1 ist ein schematischer Spannungsverlauf $u_{Sfx,y}$ gezeigt, der den prinzipiellen Spannungsverlauf der beiden Raumzeigerkomponenten ($u_{Sfx}$ und $u_{Sfy}$) charakterisiert, wobei diese in den meisten Betriebspunkten unterschiedliche Amplituden aufweisen, und daher mit $u_{Sfx,y}$ bezeichnet ist.

Die Bedeutung der Bezeichnungsweise "x,y" bei anderen Größen ist entsprechend.

Mittels Stromsensoren wird der Motorstromraumzeiger, also ein Drehstromraumzeiger, bestimmt, aus dessen Verlauf die Rotorstellung erfindungsgemäß bestimmt wird:
Denn das vom angelegten Drehspannungsraumzeiger ($u_{Sfx}$, $u_{Sfy}$) bewirkte zeitliche Differential des Drehstromraumzeigers ist nur an vier Umfangswinkelpositionen parallel zum vom Umrichter an den Motor angelegten Drehspannungsraumzeiger. An den anderen Umfangswinkelpositionen weicht die Richtung des hochfrequenten Stromanstiegs von der zum Drehspannungsraumzeiger parallelen Ausrichtung entsprechend der Inhomogenität ab und bewirkt dadurch einen zur Richtung des angelegten hochfrequenten Spannungsraumzeigers senkrechte Komponente, welche genutzt wird, um die tatsächliche Rotorstellung zu beobachten.

Beim geregelten Betrieb wird auf den Grundwellenanteil $u_{Sf}$ ein höher frequenter Anteil $u_c$ überlagert.

In Figur 1 ist der Verlauf der in x-Richtung wirkenden Komponente $u_{cx}$ gezeigt, wobei ein Spitzenwert $\hat{u}_C$ vorhanden ist. Dieser auf den Grundwellenanteil aufmodulierte Spannungsanteil $u_{CX}$ bewirkt den Trägeranteil $i_{Sc}$ des Statorstromraumzeigers. Dabei ist der Verlauf periodisch mit der Periodendauer $T_{ctrl}$, welche das Vierfache der Pulsweitenmodulationsperiodendauer $T_{PWM}$ beträgt. Dieser Verlauf des als Trägersignal $u_{cx}$ bezeichneten Signals weist außerdem mehr als zwei Nulldurchgänge innerhalb der Periodendauer $T_{ctrl}$ auf und ist als digitales binäres Signal mit einem zugehörigen Muster darstellbar.

Somit entstehen bei gleicher zu modulierender Spannung in der ersten und zweiten Hälfte der Pulsweitenmodulationsperiodendauer $T_{PWM}$ symmetrisch zur Mitte der Pulsweitenmodulationsperiode liegende Schaltvorgänge. Insbesondere liegt in jeder der Hälften dabei nur ein einziger Schaltvorgang vor, also nur eine einzige Schaltflanke. Darüber hinaus macht sich das Verfahren zu Nutze, um in der ersten und zweiten Hälfte verschiedene Spannungswerte zu modulieren, also einen jeweiligen Schaltzeitpunkt zu dem in der jeweiligen Hälfte vorgegebenen, als Mittelwert über die jeweilige PWM-Periodendauerhälfte darzustellenden Spannungswert zu bestimmen. Von Vorteil ist dabei, dass der hochfrequente Anteil im Takt der halben Periodendauer auflösbar ist, also für den hochfrequenten Anteil die doppelte Pulsweitenmodulationsfrequenz verwendbar ist und somit eine verbesserte Erfassung des aufmodulierten Anteils ermöglicht ist.

Wie in Figur 1 gezeigt, ist der Grundwellenanteil $u_{Sf}$ der vom Wechselrichter zu stellenden Spannung $u_s$ innerhalb der gesamten Periodendauer $T_{CTRL}$ konstant. Erst ist der nächsten Periode mit der Periodendauer $T_{CTRL}$ wird ein neuer Spannungswert des Grundwellenanteils gestellt. Somit baut sich der Grundwellenanteil $i_{Sf}$ des Stromes näherungsweise proportional mit der Zeit auf, wobei im Folgenden bei der mathematischen Darstellung des Stromverlaufs nicht nur ein linearer Anteil sondern auch ein kleiner quadratischer Anteil berücksichtigt wird, wodurch auch eine in Abhängigkeit des Statorstromes sättigende Induktivität berücksichtigt wird und somit das Ergebnis nicht negativ verfälscht. Somit wird also der Stromverlauf als Taylorentwicklung zweiter Ordnung dargestellt.

Das Muster des Trägersignals $u_{CX}$ weist für jede Hälfte der Pulsweitenmodulationsperiodendauer $T_{PWM}$ einen Spannungswert auf. Somit sind innerhalb der gesamten Periodendauer $T_{CTRL}$ acht binäre Zustände wählbar. Das in Figur 1 gezeigte Muster ist also eines von 256 möglichen Mustern.

Dabei ist dieses Muster erfindungsgemäß dadurch ausgezeichnet, dass nicht nur ein geringes Signal-Rausch-Verhältnis erreichbar ist sondern auch dass das Signal mittelwertfrei ist bei Mittelwertbildung über das Intervall $T_{CTRL}$.

Außerdem wird das Muster erfindungsgemäß derart gewählt, dass - wie weiter unten erklärt wird - die Auflösung eines zum Muster zugehörigen Gleichungssystems ermöglicht wird.

Der vom Muster, also vom aufmodulierten Spannungsanteil $u_{cx}$, bewirkte Stromanteil $i_{sc}$ ist aus einer x-Komponente $i_{SCx}$ und einer y-Komponente $i_{SCy}$ zusammengesetzt, deren prinzipieller Verlauf $i_{SCx,y}$ in Figur 1 dargestellt ist, wobei die in x- und y-Richtung vorhandenen, zueinander proportionalen, jedoch unterschiedlich hohe Amplituden aufweisenden Komponenten gemeinsam als $i_{SCx,y}$ dargestellt sind. Wie bereits erwähnt, sind die durch die verwendete Pulsweitenmodulation verursachten Ripplestromkomponenten ($i_{RA}$, $i_{RB}$, $i_{RC}$) hier nicht bildlich dargestellt, werden jedoch bei der Aufstellung des weiter unten beschriebenen Gleichungssystems ebenfalls berücksichtigt.

Der vom Grundwellenanteil $u_{Sf}$ des Spannungsanteils bewirkte Stromanteil $i_{Sf}$ ist in Figur 1 als Stromverlauf dargestellt, insbesondere wobei wiederum die in x- und y-Richtung vorhandenen differentiellen Anstiege wiederum unterschiedlich groß, jedoch annähernd proportional zueinander sind und daher gemeinsam als $i_{Sfx,y}$ bezeichnet sind.

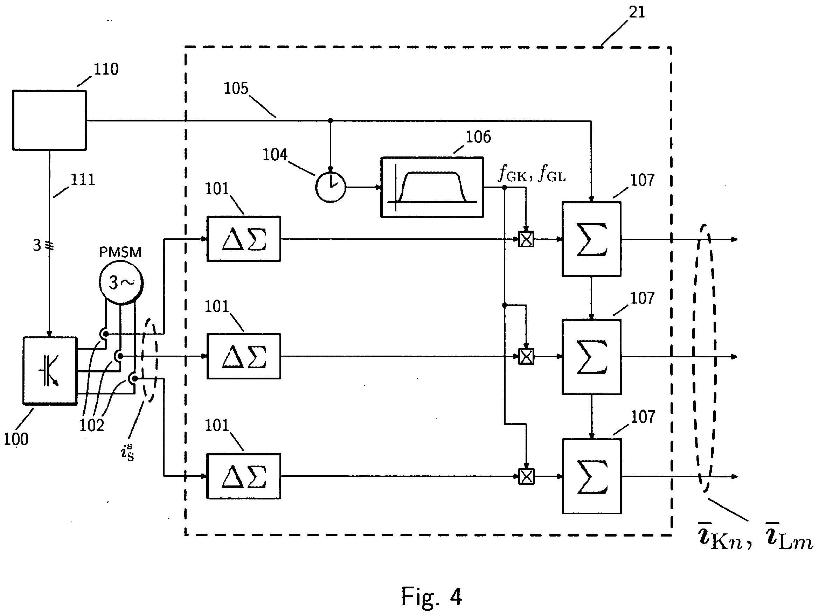

Wie in Figur 3 gezeigt, wird der am Wechselrichter 100 ausgangsseitig vorhandene Motorstromraumzeiger oder ein entsprechender Stromraumzeiger erfasst. Dabei wird die für diese Erfassung verwendete Strommesseinrichtung 21 - wie in Figur 4 näher dargestellt - unter Verwendung eines Delta-Sigma-Wandlers ausgeführt, um ein möglichst großes Signal-Rausch-Verhältnis erreichbar zu machen. Die Delta-Sigma-Modulatoren (101, 102, 103 bzw. 201, 202) erzeugen hierbei einen zeitdiskreten binären, insbesondere 1 Bit breiten, Datenstrom, dessen zeitlicher Mittelwert dem Mittelwert der erfassten Stromkomponente entspricht.

Das zur Stromerfassung zugehörige Signal wird einer Mittelwertbildung unterzogen, wobei der Mittelwert über eine jede Hälfte jeder Pulsweitenmodulationsperiode $T_{PWM}$ gebildet wird unter Berücksichtigung einer zeitabhängigen Gewichtungsfunktion, wobei in Figur 1 die zeitlichen Intervalle, über welche jeweils der gewichtete Mittelwert gebildet wird, als Folge $I_{K0}$, $I_{K1}$, $I_{K2}$, $I_{K3}$, $I_{K4}$, $I_{K5}$, $I_{K6}$, $I_{K7}$ dargestellt sind. Diese Mittelwertbildung ist in Figur 4 näher dargestellt: Dabei werden gemäß Figur 4 von einer Steuerelektronik 110 drei PWM-modulierte Ansteuersignale den Schaltern des Wechselrichters 100 zugeführt. Der vom Wechselrichter 100 gespeiste Elektromotor PMSM ist als Synchronmotor ausgeführt. Mittels Stromsensoren werden die in den Motorphasen auftretenden Ströme erfasst. Jedes der analogen Sensorsignale wird einem Delta-Sigma-Wandler (101, 102, 103) zugeführt, dessen ausgangsseitiger binärer Datenstrom, insbesondere 1 Bit breiter binärer Datenstrom, als Mittelwert dem analog erfassten Wert entspricht.

Bei zeitkontinuierlicher Ausführung wird aus dem für zeitdiskrete Ausführung vorgesehenen Summierer 107 ein Integrierer.

Der binäre Datenstrom wird jeweils mit einer zeitabhängigen Gewichtungsfunktion multipliziert und mittels eines Summierers 107 aufsummiert. Dabei wird die Aufsummierung beziehungsweise bei zeitkontinuierlicher Ausführung die Integration nur in einem Zeitabschnitt ausgeführt, dessen Anfangszeitpunkt durch ein von der Steuerelektronik 110 erzeugtes Synchronisationssignal 105 definiert ist. Am Anfangszeitpunkt wird mittels des Synchronisationssignals die Zeitbasis 104 zurückgesetzt, das auch als Rücksetzsignal für die Summierer (107, 108, 109) beziehungsweise Integrierglieder verwendet wird. Sobald also ein Synchronisationspuls 105 eintrifft, beginnt die Summation beziehungsweise Integration und außerdem erzeugt die Zeitbasis 104 eine endliche Folge von Zeitwerten, denen der Block 106 die Funktionswerte $f_{GK}$ zuordnet und als Ausgangsverlauf ausgibt. Bei Eintreffen des nächsten Synchronisationssignals 105 wird die Summation beziehungsweise Integration gestoppt, der Ergebniswert als Ausgangssignal $\overline{I_{Kn}}$ ausgegeben und die nächste Summation beziehungsweise Integration gestartet für das jeweils nachfolgende Intervall. Auf diese Weise wird also der in jeder Motorphase erfasste Stromwert einer gewichteten Mittelwertbildung unterzogen. Die Gewichtungsfunktion steigt anfangs monoton an und fällt danach wieder monoton ab. Der Zeitabschnitt entspricht einer Pulsweitenmodulationsperiodenhälfte zur Bestimmung der gewichteten Mittelwerte für die kurzen Intervalle $I_{K6}$, ...., $I_{K7}$.

Die Bildung der gewichteten Mittelwerte ist in Figur 2 verdeutlicht. Hierbei ist der aus dem Grundwellenanteil $i_{sf}$ und dem Trägeranteil $i_{sC}$ zusammengesetzte Strom $i_S$ schematisch dargestellt. Für die ersten beiden kurzen Intervalle $I_{K0}$ und $I_{K1}$ ist das Produkt aus der Gewichtsfunktion $f_{GK}$ und dem Strom $i_s$ dargestellt. Außerdem ist auch das über dem jeweiligen Intervall $I_{K0}$ und $1_{K1}$ bestimmte Integral dargestellt. Aus den zum jeweiligen Intervall gehörigen Integralwert wird die unterste Funktion zusammengesetzt. Die Integration wird dabei nur über dem jeweiligen Intervall ausgeführt.

Zur Bestimmung der entsprechenden gewichteten Mittelwerte für die langen Intervalle $I_{L0}$, $I_{L1}$, $I_{L2}$, $I_{L3}$ wird entsprechend vorgegangen.

Wie im unteren Teil der Figur 1 gezeigt, erfolgt der Anstieg und das Abfallen der zeitabhängigen Gewichtsfunktion $f_{GK}$ beziehungsweise $f_{GL}$ symmetrisch zur Mitte des jeweiligen Intervalls, das der Dauer einer Pulsweitenmodulationsperiodendauer oder deren Hälfte entspricht. In einem optimalen Ausführungsbeispiel werden die Koeffizienten der zeitabhängigen Gewichtsfunktion $f_{GK}$ beziehungsweise $f_{GL}$ vorteiligerweise derart bestimmt, dass sie aus der zeitlich versetzten Addition der Koeffizienten eines Sinc^N Filters gewonnen werden. Die Ordnung N des Filters sowie die Anzahl der zeitlich versetzten Additionen werden derart gewählt, dass für die gemittelten Werte ein bestmögliches Signal-Rausch-Verhältnis erreicht wird.

Außerdem wird auch ein Mittelwert des erfassten Stroms für jedes Intervall $I_{L0}$, $I_{L1}$, $I_{L2}$, $I_{L3}$, welches jeweils eine ganze Pulsweitenmodulationsperiode $T_{PWM}$ überdeckt, gebildet unter Berücksichtigung einer zeitabhängigen Gewichtungsfunktion, die in Figur 1 als $f_{GL}$ bezeichnet wird und sich für jedes Intervall der Intervall-Folge $I_{L0}$, $I_{L1}$, $I_{L2}$, $I_{L3}$ periodisch wiederholt. Dabei wird im Unterschied zur vorbeschriebenen gewichteten Mittelwertbildung der Zeitabschnitt anstatt einer Pulsweitenmodulationsperiodenhälfte entsprechend doppelt so lang gewählt; der Zeitabschnitt entspricht also einer ganzen Pulsweitenmodulationsperiode.

Wie in Figur 1 ersichtlich, wird das letzte kurze Intervall $I_{K7}$ der Zeitspanne $T_{CTRL}$ verwendet, um mathematische Berechnungen mit den erfassten Stromwerten auszuführen. Daher werden nur aus den Stromwerten zu $I_{K6}$, $I_{K1}$, $I_{K2}$, $I_{K3}$, $I_{K4}$, $I_{K5}$, $I_{K6}$ und $I_{L0}$, $I_{L1}$, $I_{L2}$ die wesentlichen Parameter des Musters bestimmt. Dies sind insbesondere die Amplitude $\hat{i}_{SCx}$ beziehungsweise $\hat{i}_{SCy}$ des durch den dem Muster entsprechenden, aufmodulierten Spannungsverlaufs $u_c$ bewirkten Stromverlauf $i_{SC}$ und die Parameter des durch den Grundwellenanteil $u_{Sf}$ des Spannungsverlaufs bewirkten Anstieg des GrundwellenStromverlaufs $i_{Sf}$. Da der Verlauf des Musters vorgegeben wird und daher bekannt ist, genügt es dabei, den Amplitudenwert $i_{SCx,y}$ zu bestimmen. Denn damit ist der Verlauf des hochfrequenten Stromanteils bekannt. Darüber hinaus wird noch der Anfangswert $i_{f0}$, die Steigung $m_f$ und der quadratische Anteil $q_f$ des Stromverlaufs des Grundwellenanteils bestimmt. Zusätzlich können noch die Ripple-Ströme bestimmt werden, die infolge der verwendeten Pulsweitenmodulationsverfahren entstehen. Die Stromverläufe in Figur 1 sind ohne Berücksichtigung des Verlaufs der Pulsweitenmodulationsspannung dargestellt.

Der Zusammenhang zwischen den Strommesswerten und den genannten Werten ist daher gegeben durch:

$$
\begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \underbrace{\begin{pmatrix} 1 & k_{K0} & l_{K0} & r_{A0} & r_{B0} & 0 & c_{s0} \\ \vdots & \vdots & \vdots & \vdots & \vdots & \vdots & \vdots \\ 1 & k_{K6} & l_{K6} & r_{A6} & r_{B6} & 0 & c_{s6} \\ 1 & k_{L0} & l_{L0} & 0 & 0 & r_{C0} & c_{l0} \\ 1 & k_{L1} & l_{L1} & 0 & 0 & r_{C1} & c_{l1} \\ 1 & k_{L2} & l_{L2} & 0 & 0 & r_{C2} & c_{l2} \end{pmatrix}}_{\boldsymbol{A}} \begin{pmatrix} \boldsymbol{i}_{f0} \\ \boldsymbol{m}_f T_{PWM} \\ \boldsymbol{q}_f T_{PWM}^2 \\ \bar{\imath}_{RA} \\ \bar{\imath}_{RB} \\ \bar{\imath}_{RC} \\ \hat{\imath}_{Sc}^e \end{pmatrix}
$$

Die Komponenten der Systemmatrix sind als Funktion des Musters eindeutig bestimmte Werte. Die Auflösung des hier gezeigten linearen Gleichungssystems ist nur möglich, wenn der Rang der Matrix maximal ist. Die sieben unbekannten Werte (rechter Vektor) sind dann bestimmbar aus den gewichtet gemittelten Messwerten (linker Vektor), wobei die Bestimmung als linearer Zusammenhang der gewichtet gemittelten Messwerte ausdrückbar ist. Dies ist die Kernidee der vorliegenden Erfindung ! Die sieben unbekannten Werte, also der rechte Vektor, ermöglicht die quantitative Parametrisierung des qualitativ gesehen bekannten Verlaufes des Trägeranteils und des Grundwellenanteils. Denn der qualitative Verlauf des Grundwellenanteils ist in der verwendeten Näherung als quadratische Form angenommen und der qualitative Verlauf des Trägeranteils ist aus der aufgeprägten Trägerspannung bekannt.

Nach Bestimmung der sieben unbekannten Werte (rechter Vektor) ist also der Grundwellenanteil, der Trägeranteil und - wenn gewünscht - der Ripple-Anteil des Statorstromes jeweils bekannt. Dies aber sind die Ausgangsgrößen des Blocks 20, mit welchen dann die Reglerstrukturen gemäß Figur 3 betrieben werden.

Die Matrixkomponenten werden bestimmt gemäß:

$$
k_{Lj} = \frac{2j+1}{2} \qquad j = 0 \ldots 2
$$

$$
k_{Ki} = \frac{2i+1}{4} \qquad i = 0 \ldots 6
$$

$$l_{\mathrm{L}j} = \frac{1}{3}\left(3j^2 - 3j + 1 - \Delta K_1\right) \qquad j = 0 \ldots 2$$

$$l_{\mathrm{K}i} = \frac{1}{12}\left(3i^2 + 3i + 1 - \Delta K_{\mathrm{K}}\right) \qquad i = 0 \ldots 6$$

wobei

$$\Delta K_x = \frac{3N_x - 2N_x^2 - 1}{N_x^2} + \frac{1}{N_x^2}\sum_{r=0}^{N_x-1} k_{\mathrm{FIR}x,r}\left[r\left(6N_x - 3\right) - 3r^2\right] \qquad x = \mathrm{K, L}$$

$$\Delta K_{\mathrm{K}} = \frac{3N_{\mathrm{K}} - 2N_{\mathrm{K}}^2 - 1}{N_{\mathrm{K}}^2} + \frac{1}{N_{\mathrm{K}}^2}\sum_{r=0}^{N_{\mathrm{K}}-1} k_{\mathrm{FIRK},r}\left[r\left(6N_{\mathrm{K}} - 3\right) - 3r^2\right]$$

$$\Delta K_{\mathrm{L}} = \frac{3N_{\mathrm{L}} - 2N_{\mathrm{L}}^2 - 1}{N_{\mathrm{L}}^2} + \frac{1}{N_{\mathrm{L}}^2}\sum_{r=0}^{N_{\mathrm{L}}-1} k_{\mathrm{FIRL},r}\left[r\left(6N_{\mathrm{L}} - 3\right) - 3r^2\right]$$

ist.

Die mit r bezeichneten Matrixkomponenten beschreiben die Wirkungen der Ripple-Ströme. Bei der Auflösung des Gleichungssystems sind diese Ripple-Ströme unwichtig. Weil sie für die Regelung nicht benötigt werden. Im Übrigen weisen die Ripple-Ströme infolge des verwendeten symmetrischen PWM-Verfahrens derartige Symmetrieeigenschaften zueinander auf, dass es nur drei unabhängige Ripple-Ströme gibt und somit das Gleichungssystem eindeutig auflösbar ist sowie das Signal-Rauschverhältnis verbessert ist.

Die mit c bezeichneten Matrixkomponenten beschreiben die Beiträge des Trägerstromanteils zu den jeweiligen gebildeten Mittelwerten.

In dem in Figur 1 gezeigten Ausführungsbeispiel weisen die mit c bezeichneten Matrixkomponenten folgende Werte auf:

$C_{s0}=0$

$C_{s1}=-1$

$C_{s2}=-1$

$C_{s3}=0$

$C_{s4}=1$

$C_{s5}=1$

$C_{l0}= -0,5$

$C_{l1}= -0,5$

$C_{l2}= 1,046$

Für die mit r bezeichneten Matrixkomponenten sind bei diesem Ausführungsbeispiel folgende Werte verwendet:

$r_{A0} = 0$

$r_{A1} = 0$

$r_{A2} = 1$

$r_{A3} = -1$

$r_{A4} = 1$

$r_{A5} = 0$

$r_{A6} = 0$

$r_{B0} = 1$

$r_{B1} = -1$

$r_{B2} = 0$

$r_{B3} = 0$

$r_{B4} = 0$

$r_{B5} = -1$

$r_{B6} = 1$

$r_{C0} = 0$

$r_{C1} = 0$

$r_{C2} = 1$

Im gezeigten Beispiel erhält man ein überbestimmtes lineares Gleichungssystem, wobei der Rang der Systemmatrix maximal ist. Durch Bildung der pseudoinversen Matrix wird dieses gelöst, wobei dadurch der Signal-Rausch-Abstand weiter verbessert wird, was sich günstig auf die erzielbare Qualität der ermittelten Rotorstellung auswirkt.

Als Lösung des Gleichungssystems wird die Amplitude des Träger-Stromanteils als Skalarprodukt der Strommesswerte und einem Gewichtsvektor darstellbar.

$$(1)$$

$$\hat{\imath}_{\mathrm{cm}} = \begin{pmatrix} h_{\mathrm{K0}} & \dots & h_{\mathrm{K6}} & h_{\mathrm{L0}} & h_{\mathrm{L1}} & h_{\mathrm{L2}} \end{pmatrix} \cdot \begin{pmatrix} \overline{\imath}_{\mathrm{K0}} \\ \vdots \\ \overline{\imath}_{\mathrm{K6}} \\ \overline{\imath}_{\mathrm{L0}} \\ \overline{\imath}_{\mathrm{L1}} \\ \overline{\imath}_{\mathrm{L2}} \end{pmatrix}$$

Dabei sind die mit h bezeichneten Werte aus der mittels Computerrechenprogrammen, wie MATLAB oder dergleichen, erhältlichen Lösung des überbestimmten Gleichungssystems hervorgegangen. Sie werden der untersten Zeile der pseudoinversen Matrix entnommen, welche mittels Computerrechenprogrammen, wie MATLAB oder dergleichen, bestimmt wird. Dabei wird die mathematische wichtige Eigenschaft genutzt, dass eine geschlossene Gleichung für die pseudoinverse Matrix bestimmbar ist, wenn die Matrix maximalen Rang hat.

Ebenso wird der Grundwellenstromanteil $i_{fp}$ zum Zeitpunkt am Ende des Regelintervalls $T_{CTRL}$ als Skalarprodukt der Strommesswerte und einem Gewichtsvektor darstellbar:

$$
\boldsymbol{i}_{\mathrm{fp}} = \begin{pmatrix} p_{\mathrm{K}0} & \cdots & p_{\mathrm{K}6} & p_{\mathrm{L}0} & p_{\mathrm{L}1} & p_{\mathrm{L}2} \end{pmatrix} \cdot \begin{pmatrix} \overline{\imath}_{\mathrm{K}0} \\ \vdots \\ \overline{\imath}_{\mathrm{K}6} \\ \overline{\imath}_{\mathrm{L}0} \\ \overline{\imath}_{\mathrm{L}1} \\ \overline{\imath}_{\mathrm{L}2} \end{pmatrix} \tag{2}
$$

Dabei lassen sich die mit p bezeichneten Werte ebenfalls aus der oben beschriebenen Lösung des überbestimmten Gleichungssystems entnehmen. Hierzu werden die ersten drei Zeilen der pseudoinversen Matrix mit den Gewichten 1, 4 und 16 aufsummiert, da der Zeitpunkt, auf den hin der Grundwellenstrom zu prädiktieren ist, im Beispiel vier PWM-Intervalle vom Beginn des Regelintervalls $T_{ctrl}$ entfernt ist.

Da die Lösung des Gleichungssystems offline erfolgen kann, müssen in jedem Regelraster nur zwei gewichtete Summen über die Strommesswerte bestimmt werden, um die gewünschte analytische Separation der Grundwellen und Hochfrequenzstromkomponenten voneinander zu erreichen. Im gleichen Schritt wird somit ebenfalls die notwendige Demodulation des Hochfrequenzstromes vorgenommen. Somit ist eine sehr schnelle und einfache Bestimmung der gewünschten Größen möglich.

Allgemein als Lösung ergibt sich:

$$
p_{\mathrm{K}n} = \boldsymbol{A}^{+}_{1,n+1} + 4 \cdot \boldsymbol{A}^{+}_{2,n+1} + 16 \cdot \boldsymbol{A}^{+}_{3,n+1} \qquad \text{für} \qquad n = 0, \ldots, 6
$$

$$
p_{\mathrm{L}n} = \boldsymbol{A}^{+}_{1,n+8} + 4 \cdot \boldsymbol{A}^{+}_{2,n+8} + 16 \cdot \boldsymbol{A}^{+}_{3,n+8} \qquad \text{für} \qquad n = 0, 1, 2
$$

$$
h_{\mathrm{K}n} = \boldsymbol{A}^{+}_{7,n+1} \qquad \text{für} \qquad n = 0, \ldots, 6
$$

$$
h_{\mathrm{L}n} = \boldsymbol{A}^{+}_{7,n+8} \qquad \text{für} \qquad n = 0, 1, 2
$$

, wobei

$$
\boldsymbol{A}^{+} = (\boldsymbol{A}^{*}\boldsymbol{A})^{-1}\boldsymbol{A}^{*}
$$

Im vorliegenden Ausführungsbeispiele ergibt sich als Lösung:

$p_{K0}$ = -0.062918

$p_{K1}$ = 0.648522

PK2 = -0.258599

PK3 = -0.857744

$p_{K4} = -0.599144$

$p_{K5} = 0.849144$

$p_{K6} = 1.560584$

$p_{L0} = 0.285564$

$p_{L1} = -0.565410$

$p_{L2} = 0.000000$

$h_{K0} = 0.226608$

$h_{K1} = -0.203660$

$h_{K2} = -0.251929$

$h_{K3} = 0.050485$

$h_{K4} = 0.302414$

$h_{K5} = 0.197586$

$h_{K6} = -0.232683$

$h_{L0} = 0.011687$

$h_{L1} = -0.100509$

$h_{L2} = 0.000000.$

Somit ist aus den gewichtet über eine jeweilige Pulsweitenmodulationsperiode und über ein jeweiliges Halbintervall jeder Pulsweitenmodulationsperiode gemittelten Messwerten eine eindeutige Bestimmung der gesuchten Werte in einfacher, wenig rechenintensiver und rechenzeitsparender Weise ermöglicht. Denn eine gewichtet lineare Verknüpfung der Messwerte ist sehr schnell und einfach bestimmbar.

Bei weiteren erfindungsgemäßen Ausführungsbeispielen ist die Periodendauer $T_{ctrl}$ das n-fache der Pulsweitenmodulationsfrequenz $T_{PWM}$, wobei n zumindest zwei ist, drei ist oder größer ist. Das Muster wird dann wiederum aus der Anzahl 2^(2n) aller möglichen Muster ausgewählt, indem nur die mittelwertfreien Muster mit einem möglichst guten Signal-Rausch-Verhältnis des Ergebnisses verwendet werden, bei denen eine eindeutige und/oder überbestimmte Bestimmung der gewünschten Werte ermöglicht ist, insbesondere also die Matrix einen maximalen Rang aufweist.

Nach Bestimmung des im Vergleich zum Grundwellenanteil höher frequenten Trägersignals ist wegen der inhomogenen Ausführung des Rotors der Synchronmaschine, also auch des in Umfangsrichtung inhomogenen Betrags der Statorinduktivität der Maschine, ein Erkennen einer oder mehrerer und/oder ein Hinregeln auf Rotorwinkelpositionen ermöglicht, bei denen der Motorspannungsraumzeiger der in den Stator eingespeisten Drehspannung und der von diesem Raumzeiger bewirkte Motorstromraumzeiger parallel zueinander sind.

Auf diese Weise ist auch ein Bestimmen der Rotorposition ermöglicht:
Wie in Figur 3 gezeigt, wird dem ausgangsseitigen Signal des Stromreglers 10 die dem Muster entsprechende Trägerspannung $u_{cX}$ aufsummiert und der so entstandene Raumzeiger mittels des Transformationsblocks 28 um den Schätzwert des Rotorwinkels $\theta_e$ gedreht. Der so entstandene Spannungsraumzeiger $u_S^{S*}$ wird dem Stator der Drehstrommaschine, die als Synchronmaschine PMSM ausgeführt ist, mittels des pulsweitenmoduliert betriebenen Wechselrichters 100 zugeführt.

Der ausgangsseitig am Wechselrichter 100 erfasste und mittels der Strommesseinrichtung 21 analog-digitalgewandelte Motorstromraumzeiger $i_S^S$ wird dem Transformationsblock 29 zugeführt, wo der Motorstromraumzeiger um Winkelwert - $\theta_e$ gedreht wird, also um den Rotorwinkelbetragsschätzwert zurückgedreht wird, und dieser transformierte Schätzwert $i_S^e$ als Eingangs-Stromwertesignal dem Modul 20, also dem Mittel zur Demodulation und Entkopplung des Trägeranteils vom Grundwellenanteils, zugeführt.

Da die Statorinduktivität der Elektromaschine in Umfangsrichtung nicht homogen ist, ergibt sich auf das ausschließlich in x-Richtung eingekoppelte Trägersignal $u_{cx}$ auch eine Stromantwort $i_{cmy}$ in y-Richtung. Diese ist in erster Näherung proportional zum Differenzwinkel zwischen Injektionsrichtung, also der geschätzten Rotorstellung, und der Rotorstellung selbst. Daher ist mit der in Block 29 ersichtlichen Proportionalitätskonstante ein entsprechender Rotorwinkelwert $\theta_e$ bestimmbar, der dem Summierer 24 zugeleitet wird. Die Proportionalitätskonstante beträgt - $L_D * L_q$ / ($T_{PWM} * \hat{u}_c * \Delta L$), wobei

$L_D$ die Statorinduktivität in d-Richtung, also Richtung des feldbildenden Stromanteils,
$L_q$ die Statorinduktivität in q-Richtung, also Richtung des momentbildenden Stromanteils,
$T_{PWM}$ Pulsweitenmodulationsdauer
$\hat{u}_c$ Spitzenwert des Trägeranteils der Spannung

$$\Delta L_{\sim} = ( L_D - L_q)/2 \, .$$

Im Modul 20 wird die Amplitude des Trägerstroms $\hat{i}_{Cmy}$, also die y-Komponente des erfassten (measured) Trägeranteils $\hat{i}_{Cmy}$ des Statorstroms gemäß Gleichung (1), und der Grundwellenstromanteil $i_{fp}^e$ bestimmt.

Der Grundwellenstromanteil $i_{fp}^e$ wird einem Differenzbildner 30 als Istwert zugeführt, der Abweichung zum Sollwert $i_S^{e*}$ des Statorstroms bestimmt. Die Abweichung wird dem PI-Stromregler 10, insbesondere PI-Reglerglied, zugeführt.

Im Modul 20 ist die oben erläuterte Methode zur Bestimmung des in Figur 1 gezeigten Stromanteils $\hat{i}_{SCy}$, dem als Messwert der vom Modul 20 bestimmte Stromanteil $\hat{i}_{Cmy}$ entspricht, sowie zur Bestimmung des auf das Ende des Regelintervalls prädiktierten Grundwellenstroms realisiert. Dabei werden die während des Intervalls $T_{CTRL}$ zeitlich aufeinander folgend erfassten Stromwerte den in Figur 1 und Figur 2 dargestellten gewichteten Mittelwertbildungen unterworfen und die so bestimmten Mittelwerte der beschriebenen linearen Operation gemäß Gleichung (1) bzw (2) unterworfen, die schnell und einfach ausführbar ist.

Daraus wird dann der kennzeichnende Wert $\hat{i}_{Cmy}$ des Trägersignals bestimmt, woraus ein Maß für die Abweichung des Schätzwerts $\theta_e$ vom wirklichen Rotorwinkel $\theta$ bestimmt wird mittels des Summierers 24. Aus diesem Maß wird ein verbesserter Schätzwert für den Rotorwinkel $\theta_{rc}$ bestimmt, in dessen Richtung mittels des Transformationsblocks 25 ein Sollmagnetisierungsraumzeiger $\tilde{\Psi}_{rc}$ gelegt wird, dessen Betrag $\psi_{PM}$ vorgegeben wird und der dann einer Einheit 22 zur Bestimmung des Schätzwertes $\theta_e$ zugeführt wird, welcher auch der erfasste Motorstromraumzeiger $i_S^S$ und der vom Wechselrichter 100 gestellte Spannungsraumzeiger $u_S^{S*}$ zugeführt wird.

In der Einheit 22 wird mittels des Summierers 27

- die Differenz aus Spannungsraumzeiger $u_S^{S*}$ und

- dem mit dem Statorwiderstand $R_s$ multiplizierten Motorstromraumzeiger $i_S^S$ gebildet,

- eine Rückkoppelgröße addiert, welche das Ausgangssignal des Blocks 23 ist,

und das Ergebnis einem Integrierglied 26 zugeführt, dessen Ausgangssignal einem Differenzbildner zugeführt wird, der die Differenz zum mit der Statorinduktivität $L_S$ multiplizierten Motorstromraumzeiger $i_S^S$ bildet. Die so gewonnene Differenz weist in die Richtung des Schätzwertes des Rotorwinkels $\theta_e$. Daher wird mit dem Block 28 dieser Rotorwinkel bestimmt und dem Summierer 24 zugeleitet. Außerdem wird die Differenz einem weiteren Differenzbildner zugeführt, der die Differenz zum Sollmagnetisierungsraumzeiger $\tilde{\Psi}_{rc}$ bildet. Das Ausgangssignal dieses weiteren Differenzbildners wird dem Block 23, einem PI-Reglerglied, zugeführt, dessen Ausgangssignal als Rückkoppelgröße dem Summierer 27 zugeführt wird.

Die Einheit 22 umfasst also ein Maschinenmodell der Synchronmaschine. Wegen der Integrierglieder ist die Arbeitsweise der Einheit 22 im Wesentlichen vom Grundwellenanteil der zugeführten Größen bestimmt und ermöglicht somit, ein grundwellenbasiertes Modell der Synchronmaschine im Bereich kleiner Drehzahlen und im Stillstand zu stabilisieren, indem der aus der Trägerinformation gewonnene Schätzwert für den Rotorwinkel $\theta_{rc}$ in einer Rückkoppel-schleife zur Beseitigung der Driftprobleme der ansonsten offenen Integration, insbesondere im Block 26, verwendet wird.

Die Regeleinheit des Umrichters arbeitet nach dem Maschinenmodell in zeitdiskreter Weise. Dabei werden die jeweils neuen Sollwerte aus den erfassten Istwerten für jeden Zyklus neu bestimmt. Die zeitliche Länge des Zyklus entspricht der Periodenlänge $T_{CTRL}$ des Trägersignals. Somit wird also aus den erfassten Stromwerten $\underline{i}_s^s$ von der Regeleinheit ein aktuell zu stellender Spannungsraumzeiger $\underline{u}_s^{s*}$ bestimmt. Da die Rechenzeit hierfür am Ende des aktuellen Zyklus, also im siebten kurzen Intervall $I_{K7}$ geschieht, wobei in Figur 1 diese Rechenzeit als Verlauf von ctrl dargestellt ist, wird aus den zuvor erfassten Stromwerten der Verlauf des Grundwellenanteils des Stroms prognostiziert auf denjenigen Zeitpunkt, zu welchem der zu stellende Spannungsraumzeiger wirksam wird. Somit ist eine besonders gute und dynamische Stromregelung erreichbar, da hierdurch die ansonsten vorhandene Totzeit in der Rückführung des Strom-Istwertes eliminiert wird.

Für die Prognose des Stromverlaufs wird hierbei insbesondere also der Anfangswert $\mathbf{i}_{f0}$, die Steigung $\mathbf{m}_f$ und der quadratische Anteil $\mathbf{q}_f$ des Grundwellenstrom-Verlaufs verwendet. Diese Werte müssen jedoch nicht in jedem Regelraster explizit berechnet werden, sondern sind bereits durch die Bildung der gewichteten Summe der einzelnen Strommesswerte zur Ermittlung des prädiktierten Strommesswertes berücksichtigt. Somit ist die Prädiktion des Grundwellenstromraumzeigers auch unter nichtlinearen Verhältnissen der Induktivitäten in einfacher und rechenzeitsparender Weise möglich.

Bei weiteren erfindungsgemäßen Ausführungsbeispielen werden nicht nur lineare und quadratische Anteile sondern auch höhere Ordnungen berücksichtigt, so dass eine verbesserte Prognose und/oder eine längere Periodendauer des Trägersignals einsetzbar ist.

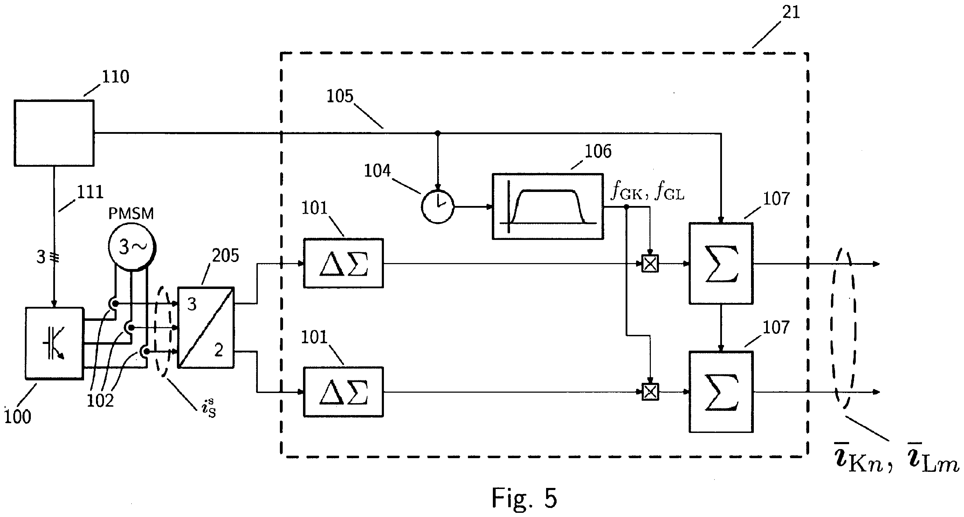

Bei einem anderen Ausführungsbeispiel wird anstatt der gewichteten Mittelwertbildung nach Figur 4 die gewichtete Mittelwertbildung nach Figur 5 angewendet, bei der zwar die Ströme in allen drei Motorphasenleitungen erfasst werden, jedoch der zugehörige Motorstromraumzeiger gebildet wird und dann in ein kartesisches Koordinatensystem transformiert wird vom Transformier-Glied 205, so dass der Motorstromraumzeiger in zwei Komponenten darstellbar ist. Dementsprechend sind zur gewichteten Mittelwertbildung nur diese zwei Komponenten einem jeweiligen Delta-Sigma-Wandler (201, 202) zuzuleiten, deren binäres Ausgangssignal, dem die jeweilige Gewichtsfunktion aufmultipliziert wird, wiederum jeweils einem Summierer (203, 204), insbesondere Integrierglied, zugeleitet wird, der zum jeweiligen Zeitabschnitt zugehörig den gewichteten Mittelwert bildet. Die Ausgangssignale der Summierer (203, 204) werden als Darstellung des Motorstroms, also Motorstromraumzeigers, verwendet. Wenn die Länge des Zeitabschnitts bei der Gewichtung einer Pulsweitenmodulationsperiodenhälfte entspricht, sind auf diese Weise die erfassten und gewichtet gemittelten Stromwerte $I_{K0}$, $I_{K1}$, $I_{K2}$, $I_{K3}$, $I_{K4}$, $I_{K5}$, $I_{K6}$, $I_{K7}$ bestimmt, wobei hierzu die Länge des Zeitabschnitts bei der Gewichtung der Pulsweitenmodulationsperiodenhälfte entspricht. Der Index K bezeichnet hierbei das zeitliche Intervall als "kurz" im Gegensatz zum Index L, der die zeitlich längeren Intervalle bezeichnet.

Dabei wird wiederum von der übergeordneten Steuerelektronik 110, welche eine Zeitbasis aufweist und die Ansteuersignale der Leistungshalbleiter des Wechselrichters 100 erzeugt, ein Synchronisationssignal 105 erzeugt, das der Zeitbasis 104 zugeleitet wird und den Summierern 203 und 204. Die Zeitbasis erzeugt wiederum fortlaufend aufsteigende Zweitwerte, zu denen der Block 106 die Werte der Gewichtsfunktion ermittelt und als Ausgangssignal dem Multiplizierer zuleitet. Die Summation wird bei Eintreffen des nächsten Synchronisationspulses 105 gestoppt, das Er-gebnis als Ausgangssignal ($i_{kn}$, $i_{Lm}$) herausgegeben und die neue Summation gestartet. Somit umfasst das Ausgangssignal des Summierers 203 die gewichteten Mittelwerte über das jeweilige kurze Intervall $I_{K0}$, $I_{K1}$, ... und das Ausgangssignal des Summierers 204 die gewichteten Mittelwerte über das jeweilige lange Intervall $I_{L0}$, $I_{L1}$, ... .

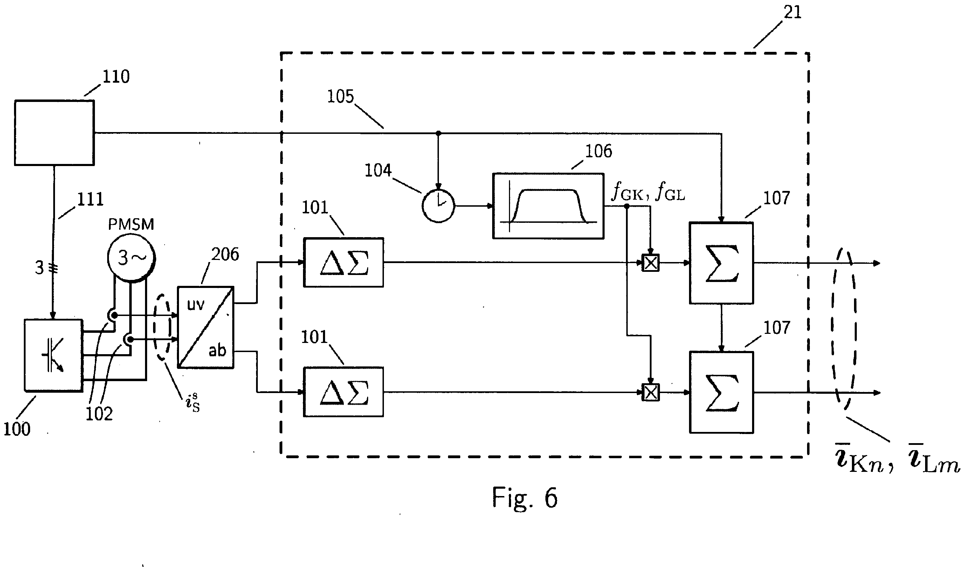

Bei einem anderen Ausführungsbeispiel wird anstatt der gewichteten Mittelwertbildung nach Figur 5 die gewichtete Mittelwertbildung nach Figur 6 angewendet, bei der anstatt in allen drei nur in zwei der drei Motorphasenleitungen die Stromwerte erfasst werden. Der der dritten Motorphasenleitung zugeordnete Stromwert wird als Summe der beiden anderen gebildet, wobei das Vorzeichen umgekehrt wird. Wiederum wird der so in drei nicht kartesischen Komponenten dargestellte Motorstromraumzeiger einem Transformier-Glied 206 zur Transformation in ein kartesisches Koordinatensystem zur Darstellung des Motorstroms zugeführt.

Im Folgenden wird ein weiteres erfindungsgemäßes Ausführungsbeispiel ausführlich erläutert:
Wie erwähnt, löst die Erfindung die Aufgabe, eine geberlose Regelung bei einem Synchronmotor zu erreichen.

Bei einer Synchronmaschine mit anisotropem Verhalten resultiert aus einer in der angenommenen Rotorachse angelegten Trägerspannung eine Stromänderung, deren Richtung nur dann mit der Richtung der angelegten Trägerspannung übereinstimmt, wenn die angenommene Rotorachse mit der tatsächlichen übereinstimmt. Andernfalls entsteht zusätzlich zur parallelen Stromänderung auch eine Stromänderung quer zur Trägerspannung. Aus der gemessenen Stromänderung in Querrichtung lässt sich somit eine Aussage über den Differenzwinkel zwischen der angenommenen und der tatsächlichen Rotorstellung gewinnen.

Mit Hilfe dieser Information lässt sich eine drehgeberlose Regelung unter Verwendung unterschiedlicher Verfahren erreichen. Dies kann beispielsweise dadurch geschehen, dass ein Regelkreis die erfasste Trägerstromquerkomponente zu Null regelt, indem die angenommene Rotorstellung so verändert wird, bis das Regelziel erreicht ist. Im ausgeregelten Zustand stimmt dann die angenommene Rotorstellung mit der tatsächlichen Rotorstellung überein, wodurch eine geberlose Regelung ermöglicht wird.

In einem weiteren Ausführungsbeispiel kann der aus der hochfrequenten Trägerstrominformation ermittelte Differenzwinkel zwischen angenommener und tatsächlicher Rotorstellung auch verwendet werden um ein Grundwellenmodell der Synchronmaschine so zu korrigieren, dass dies auch bei kleiner Drehzahl und im Stillstand zur drehgeberlosen Regelung verwendbar wird. Ein solches Ausführungsbeispiel ist in Figur 3 dargestellt.

Insbesondere bei Maschinen mit gering ausgeprägt anisotropem Verhalten entstehen nur sehr kleine Stromänderungen in Querrichtung, wodurch der exakten, rauscharmen Messung dieser Querkomponente eine besonders hohe Bedeutung zukommt.

Gegenstand der Erfindung ist es, ein Verfahren anzugeben, das es erlaubt, die hochfrequente Trägerstromkomponente mit einem besonders hohen Signal-Rausch-Abstand zu erfassen. Gleichzeitig soll die Separation zwischen dem Grundwellenstromanteil und dem hochfrequenten Trägerstromanteil so gestaltet sein, dass auch bei dynamischen Änderungen der drehmomentbildenden Stromkomponente keine störende Beeinflussung der separierten Trägerstromkomponente stattfindet. Ebenfalls darf die ermittelte Grundwellenstromkomponente keine Beeinflussung durch den hochfrequenten Trägerstrom aufweisen. Dies lässt sich mit den dem Stand der Technik entsprechenden Methoden unter Verwendung einer Tiefpass / Bandpass Filterkombination, wie sie in Figur 7 dargestellt ist, nicht erreichen. In [A. Consoli, A. Gaeta, G. Scarcella, G. Scelba, and A. Testa, "Optimization of Transient Operations in Sensorless Control Techniques Based on Carrier Signal Injection," in Proc. IEEE Energy Conversion Congress and Exposition, San Jose, Sept. 20-24, 2009, pp. 2115-2122] werden diese störenden Einflüsse auf die durch ein Bandpassfilter gewonnene hochfrequente Trägerstrominformation ausführlich beschrieben. Die dort vorgeschlagene Lösung dieser Problematik beruht darauf, während dynamischen Drehmomentänderungen die hochfrequente Trägerstrominformation nicht zu verwenden und stattdessen ein mechanisches Modell zur Fortsetzung des geberlosen Betriebs einzusetzen.

Im Gegensatz hierzu lässt sich unter Verwendung des erfindungsgemäßen Verfahrens eine Trägerstrominformation separieren, welche auch während sehr dynamischen Drehmomentänderungen keine derartigen störenden Einflüsse aufweist und somit auch unter diesen Betriebsbedingungen zur drehgeberlosen Regelung herangezogen werden kann. Dies wird in dem erfindungsgemäßen Verfahren erreicht, indem in jedem Regelintervall ein Wert für den Trägerstromzeiger und den Grundwellenstromzeiger über eine analytische Gleichung gewonnen wird. Diese werden entsprechend dem erfindungsgemäßen Verfahren durch lineare Gewichtung und nachfolgende Summation von mehreren in dem betrachteten Regelintervall bestimmten Strommesswerten bestimmt wird, wobei jeder Strommesswert ein zeitlich gewichteter Mittelwert des Motorstroms über ein Messintervall ist. In einer vorteilhaften Ausgestaltung umfassen diese Messintervalle jeweils eine halbe oder ganze Pulsweitenmodulationsperiode.

Die erfindungsgemäße Vorgehensweise zur Trägerspannungsinjektion und die Herleitung der zur erfindungsgemäßen Separation zu verwendenden analytischen Gleichungen wird im Folgenden näher beschrieben.

Der pulsweitenmoduliert betriebene Wechselrichter stellt dem Motor eine Spannung zur Verfügung, die einen langsam veränderlichen Grundwellenanteil und ein überlagertes höherfrequentes Trägersignal aufweist. Auf Grund der pulsweitenmodulierenden Arbeitsweise des Wechselrichters kann diese Summenspannung frühestens zu Beginn jedes neuen halben PWM-Intervalls variiert werden. Diese, dem PWM-Modulator zuzuführenden Spannungen sind somit zeitdiskret jedoch wertkontinuierlich.

Demzufolge enthält der Motorstromverlauf drei zu betrachtende Anteile:

1. Einen Grundwellenstrom, welcher sich ergeben würde, wenn ausschließlich die Grundwellenspannung zeitdiskret aber wertkontinuierlich also nicht pulsweitenmoduliert vorgegeben würde. In Figur 1, Zeile 4 ist ein solcher zeitdiskret und wertkontinuierlicher Verlauf der Grundwellenspannung dargestellt. Diese Grundwellenspannung wird im Zyklus des Regelungsintervalls $T_{ctrl}$ verändert, welches im dargestellten Ausführungsbeispiel 8 halbe PWM-Intervalle umfasst. Sie verursacht den in Figur 1, Zeile 5 dargestellten Grundwellenstromverlauf. Auf Grund der innerhalb des Regelintervalls konstanten Grundwellenspannung und dem induktiven Maschinenverhalten ergibt sich für den Grundwellenstromverlauf für jedes betrachtete Regelungsintervall ein annähernd linearer Zeitverlauf. Damit kann der Grundwellenstromverlauf für jedes Regelungsintervall durch zwei Parameter charakterisiert werden. Dies sind der Anfangswert $i_{f0}$ zu Beginn des Regelungsintervalls und die Steigung $m_f$. Sowohl bei der Grundwellenspannung als auch beim Grundwellenstrom handelt es sich um vektorielle zweikomponentige Zeigergrößen. Da sich die Komponenten dieser Zeiger bezüglich ihrem grundsätzlichen zeitlichen Verhalten nicht unterscheiden, ist jeweils für die x- und y-Komponente in Figur 1, Zeilen 4 und 5 nur ein Verlauf dargestellt. Somit handelt es sich bei den Parametern $i_{f0}$ und $m_f$ ebenfalls um zweikomponentige vektorielle Größen.

2. Einen höher frequenten Trägerstromanteil welcher sich ergeben würde, wenn ausschließlich die Trägerspannung zeitdiskret aber wertkontinuierlich also nicht pulsweitenmoduliert vorgegeben würde. In Figur 1, Zeile 6 ist ein beispielhafter Trägerspannungsverlauf dargestellt, welcher nur eine x-Komponente aufweist, das heißt der aufgeschaltete Trägerspannungsvektor weist in Richtung der aktuell geschätzten Rotorstellung $\theta_e$. Im dargestellten Ausführungsbeispiel weist die x-Komponente der Trägerspannung folgenden Verlauf auf: Für die ersten beiden halben PWM-Perioden den Wert - $\hat{u}_c$, für drei halbe PWM-Perioden den Wert + $\hat{u}_c$, für zwei halbe PWM-Perioden den Wert -$\hat{u}_c$ und abschließend für eine halbe PWM-Periode den Wert +$\hat{u}_c$. Auf Grund der über jede halbe PWM-Periode konstanten Trägerspannung und dem induktiven Maschinenverhalten ergibt sich für den Trägerstrom innerhalb jedes halben PWM-Intervalls ein linearer Verlauf. Es resultiert der in Figur 1, Zeile 7 dargestellte trägerspannungsbedingte Wechselstromanteil, welcher abschnittsweise linear ist. Der Verlauf des Trägerstromzeigers innerhalb des betrachteten Regelungsintervalls ist durch einen einzelnen vektoriellen Parameter, nämlich dessen "Amplitude"

$\hat{\boldsymbol{i}}_{SC}$ charakterisierbar. Diese wird hier als der Anstieg des Trägerstromzeigers über ein halbes PWM-Intervall definiert. Unter Kenntnis der gewählten Trägerspannungsabfolge und der Amplitude $\hat{\boldsymbol{i}}_{SC}$ ist damit der Trägerstromverlauf über das gesamte Regelungsintervall bestimmt. Die Amplitude $\hat{\boldsymbol{i}}_{SC}$ ist damit eine weitere vektorielle Größe, welche in jedem Regelungsintervall aus den gemessenen Summenstromwerten zu bestimmen ist.

3. Einen durch die Pulsweitenmodulation des Wechselrichters bedingten Stromrippleanteil. Dieser Stromripple stellt die Differenz zwischen dem Gesamtstromverlauf bei pulsweitenmodulierter Spannung und demjenigen Stromverlauf dar, welcher sich ergäbe, wenn dieselbe Spannung nicht pulsweitenmoduliert sondern wertkontinuierlich an den Motor angelegt würde. Bei symmetrischer Pulsweitenmodulation ergibt sich ein zur Mitte des PWM-Intervalls punktsymmetrischer Verlauf des Stromripples $i_R(t)$. D.h. es gilt

$$i_R\left(\frac{T_{PWM}}{2} + t\right) = -i_R\left(\frac{T_{PWM}}{2} - t\right)$$

Bei einer symmetrischen Pulsweitenmodulation liegen die steigende und fallende Schaltflanke symmetrisch zur Mitte des Pulsweitenmodulationsintervalls, sofern in beiden Hälften des PWM-Intervalls derselbe Spannungszeiger zu modulieren ist.

Bei der Messung des Motorstroms liegt dieser somit als Überlagerung dieser drei beschriebenen Stromanteile vor. Es ist nicht möglich aus einem einzelnen Strommesswert auf dessen einzelne Teilstromkomponenten zu schließen. Entsprechend dem erfindungsgemäßen Verfahren werden innerhalb eines Regelintervalls mehrere gemittelte Strommesswerte erfasst und durch geeignete Verrechnung die einzelnen Teilkomponenten vollständig und ohne gegenseitige Beeinflussung separiert. Die Kenntnis der Stromrippleanteile ist zur Regelung nicht erforderlich und daher müssen diese auch bei der Separation nicht explizit berechnet werden. Dennoch muss die Separation diese insofern berücksichtigen, dass sie die separierten Grundwellen- und Trägerstromanteile nicht verfälschen.

Bei einer einfachen, dem Stand der Technik entsprechenden Stromerfassung wird der Stromzeiger jeweils nur zu Beginn oder in der Mitte eines PWM-Intervalls abgetastet, wodurch die Messwerte bei symmetrischer Modulation keine Rippleanteile enthalten.

Das erfindungsgemäße Verfahren arbeitet in zwei hintereinander geschalteten Teilschritten. In einem ersten Teilschritt werden innerhalb jedes Regelintervalls für eine bestimmte Anzahl $m$ von Messintervallen gemittelte Strommesswerte bestimmt. Hierzu wird der erfasste Stromverlauf mit einer Gewichtsfunktion multipliziert, die sich über das jeweilige Messintervall erstreckt. Im gezeigten Ausführungsbeispiel werden insgesamt 8 Messintervalle $I_{K0}$... $I_{K7}$ festgelegt, die sich jeweils über eine halbe PWM-Periode erstrecken. Zusätzlich werden 4 weitere Messintervalle $I_{L0}$... $I_{L3}$ platziert, welche sich jeweils über eine ganze PWM-Periode erstrecken. In Figur 1, Zeile 8 ist der Verlauf der Gewichtsfunktion $f_{GK}$ über die kurzen Messintervalle dargestellt, sowie in Zeile 9 der Verlauf der Gewichtsfunktion $f_{GL}$ über die langen Messintervalle. Am Ende des Regelintervalls liegen somit 12 gemittelte Messwerte des Summenstromzeigers als Ergebnis des ersten Teilschritts vor. Entsprechend Figur 4 geschieht die Bildung der zeitlich gewichteten Mittelwerte wie folgt: Die von den Strommessgliedern (102) erfassten Motorströme werden jeweils einem Delta-Sigma-Modulator (101) zugeführt. Diese erzeugen an ihren Ausgängen jeweils einen 1 bit breiten digitalen Datenstrom dessen Mittelwert dem analogen Stromsignal entspricht. Bei einer beispielhaften Pulsweitenmodulationsperiodendauer von 125 μs und

einer Modulatorfrequenz von $f_{mod}$ = 10 MHz ergeben sich über ein langes Messintervall 1250 aufeinanderfolgende Bits des Datenstroms sowie 625 Bits über ein kurzes Messintervall. Die Verläufe der Gewichtsfunktionen für die kurzen Messintervalle bestehen somit aus $N_K$ = 625 Koeffizienten und entsprechend für die langen Messintervalle aus $N_L$ = 1250 Koeffizienten. Diese diskreten Koeffizienten werden mit $k_{FIRK,n}$ bzw. $k_{FIRL,m}$ bezeichnet und korrespondieren mit den zeitlichen Gewichtsfunktionen $f_{GK}$ bzw. $f_{GL}$. Diese Koeffizienten sind so normiert, dass ihre Summe jeweils 1 ist.

$$\sum_{r=0}^{N_K} k_{FIRK,r} = 1 \qquad \text{bzw.} \qquad \sum_{r=0}^{N_L} k_{FIRL,r} = 1 \, .$$

Die Bits des Datenstroms werden jeweils mit einem zugeordneten Koeffizienten des Verlaufs der Gewichtsfunktion multipliziert, d.h. das erste in dem betreffenden Messintervall auftretende Bit des Datenstroms wird mit dem ersten Koeffizienten der Gewichtsfunktion multipliziert, das zweite mit dem zweiten Koeffizienten, usw.

Die Erzeugung des Verlaufs der Koeffizienten der Gewichtsfunktion $f_{GK}$ bzw. $f_{GL}$ erfolgt, indem von der Steuerelektronik jeweils zu Beginn eines Messintervalls ein Synchronisationsignal (105) aktiviert wird. Dieses setzt eine Zeitbasis (104) auf null, welche im Takt des Datenstroms die Nummer des zugehörigen Koeffizienten innerhalb des Messintervalls hochzählt. Dieser Nummer wird über eine Tabelle (106) der jeweilige Koeffizient zugeordnet. Die Koeffizienten werden jeweils mit dem zugeordneten Bit des Datenstroms multipliziert und einem Summierer (107) zugeführt. Dieser wird zu Beginn jedes Messintervalls durch das Synchronisationssignal (105) zurückgesetzt. Gleichzeitig wird der zuletzt vorliegende Summenwert als Ergebnis $\bar{\imath}_{Kn}$ bzw. $\bar{\imath}_{Lm}$ des vorhergehenden Messintervalls festgehalten. Die in Figur 4 gezeigten Summierer (107) und die Tabelle (106) sind zur gleichzeitigen Verarbeitung der langen und kurzen Messintervalle doppelt auszuführen. Die 12 Strommesswerte der Messintervalle können damit jeweils als ein Skalarprodukt aus einem 625 bzw. 1250 Bit langen Ausschnitt des Datenstroms und einem 625 bzw. 1250 Koeffizienten umfassenden Vektor aufgefasst werden.

Der Verlauf der Gewichtsfunktion bzw. der Filterkoeffizienten unterliegt zunächst keiner bindenden Vorschrift. Bei einer Ausführungsform, bei der ein abtastender 8 oder 10 bit breiter Datenstrom aus einem abtastenden AD-Wandler verwendet wird, wäre z.B. ein rechteckförmiger Verlauf der Filterkoeffizienten geeignet. Dies entspricht einer reinen Mittelwertbildung was identisch ist mit einem Sinc-Filter 1. Ordnung. In einer Ausführungsform mit einem Delta-Sigma AD-Wandler, der typischerweise einen ein Bit breiten Datenstrom liefert, sind die Filterkoeffizienten vorteilhafterweise so zu wählen, dass das im Datenstrom enthaltene hochfrequente Rauschen durch eine geeignete Tiefpassfilterwirkung unterdrückt wird. Üblicherweise werden hierzu Sinc-Filter höherer Ordnung verwendet. Eine Vorgehensweise zur Bestimmung der Filter-Koeffizienten, welche gleichzeitig die Impuls-Antwort des Filters darstellen, findet sich in [S.C. Dutta Roy, "Impulse Response of sincN FIR Filters," in IEEE Transactions on Circuits and Systems-II: Express Briefs, Vol. 53, No. 3, March 2006 pp. 217-219]. *Den Filterkoeffizienten-Verlauf des vorliegenden Ausführungsbeispiels in Figur 1 und 2 erhält man durch Hintereinanderschaltung eines Sinc$^1$- und Sinc$^4$-Filters.*

Die bei der Bildung der gewichteten Mittelwerte auftretenden relevanten Signale sind in Figur 2 für das erste der vier zu einem Regelungsintervall gehörende PWM-Intervall dargestellt. Für die x- und y-Komponenten der Stromzeiger ist jeweils nur ein Verlauf repräsentativ dargestellt, da sich beide Komponenten bezüglich ihrem Zeitverhalten grundsätzlich gleichen. In der ersten Zeile der Figur 2 ist der Verlauf der Grundwellenstromkomponenten $i_{Sfx,y}$ dargestellt. Diese weisen zu Beginn des Regelungsintervalls eine Änderung der Steigung auf, da hier eine neue geänderte Grundwellenspannung wirksam wird. In der zweiten Zeile ist der Verlauf der Trägerstromkomponenten $i_{Scx,y}$ dargestellt. Diese haben zunächst während der ersten zwei halben PWM-Intervalle eine negative Steigung auf Grund der hier negativen Trägerspannung. Zu Beginn des zweiten PWM-Intervalls ändert sich der Wert der Trägerspannung auf einen positiven Wert und der Trägerstrom beginnt wieder zu steigen. In der dritten Zeile ist die Summe aus Grundwellen und Trägerstrom $i_{Sx,y} = i_{sfx,y} + i_{Scx,y}$ dargestellt, sowie gestrichelt nochmals der Grundwellenstromverlauf aus Zeile 1. Die vierte Zeile zeigt den Verlauf der Gewichtsfunktion $f_{GK}$ für die kurzen sich über ein halbes PWM-Intervall erstreckenden Messintervalle. In der fünften Zeile ist das Produkt $f_{GK} \cdot i_{Sx,y}$ aus dem Summenstromverlauf und dem Verlauf der Gewichtsfunktion dargestellt. Die sechste Zeile zeigt die Verläufe der zur Mittelwertbildung erzeugten Integrale $\int f_{GK} \cdot i_{Sx,y} \, dt$ über das beschriebene Produkt. Diese werden jeweils zu Beginn der kurzen Messintervalle auf Null zurückgesetzt. Die jeweils vor dem Zurücksetzen zuletzt vorliegenden Inhalte des Integrals stellen die gebildeten zeitlich gewichteten Mittelwerte $\bar{\imath}_{Kn}$ dar, welche festgehalten und später weiter verwendet werden. Die auf diese Weise zeitdiskret anfallenden Mittelwerte $\bar{\imath}_{Kn}$ sind in der letzten Zeile der Figur 2 dargestellt. Auf äquivalente Weise geschieht auch die Bildung der

gewichteten Mittelwerte $\overline{\imath}_{Lm}$ über die jeweils langen Messintervalle.

Die im Teilschritt 1 gebildeten Mittelwerte $\overline{\imath}_{K0}$ ... $\overline{\imath}_{K7}$ und $\overline{\imath}_{L0}$ ... $\overline{\imath}_{L3}$ werden im zweiten Teilschritt zur Bestimmung des Grundwellenstroms bzw. der Trägerstromamplitude herangezogen. Diese Berechnung erfolgt zum Ende des Regelungsintervalls. Dies ist der in Figur 1, Zeile 10 dargestellte Bereich "ctrl" während dem der Stromregler ausgeführt wird. Der digitale Stromregler muss die im nächsten Regelungsintervall zu stellende Grundwellenspannung ermittelt haben, bevor dieses beginnt. Auf Grund der hierfür erforderlichen Rechenzeit können die in den jeweils letzten Intervallen $I_{K7}$ und $I_{L3}$ bestimmten Strommittelwerte $\overline{\imath}_{K7}$ und $\overline{\imath}_{L3}$ nicht verwendet werden. Damit stehen für den nächsten zweiten Teilschritt zur Berechnung der separierten Stromkomponenten die 10 Messwerte $\overline{\imath}_{K0}$ ... $\overline{\imath}_{K6}$ und $\overline{\imath}_{L0}$ ... $\overline{\imath}_{L2}$ zur Verfügung.

Um auf die für die erfindungsgemäße Separation der Grundwellen- und Trägerstromanteile aus den zur Verfügung stehenden Mittelwerten zu verwendende analytische Gleichung zu gelangen, wird wie folgt verfahren:
Um aus den Strommittelwerten auf die Parameter der Stromkomponenten schließen zu können ist zunächst zu beschreiben, wie die einzelnen Strommittelwerte von einem Stromverlauf abhängen, wenn dieser durch die Parameter des Grundwellenstroms, des Trägerstroms und der Stromrippleanteile beschrieben wird.

Grundwellenstromanteile:

Für die Grundwellenstromkomponente wird in Erweiterung der oben bereits erwähnten Parameter $i_{f0}$ und $m_f$ zusätzlich ein quadratischer Anteil im Stromverlauf innerhalb des betrachteten Regelungsintervalls berücksichtigt. Hiermit kann also auch ein eventueller auf Grund von sättigenden Induktivitäten entstehender gekrümmter Stromverlauf exakter beschrieben werden. Der Grundwellenstrom wird also in jedem Regelungsintervall mit folgender Gleichung modelliert.

$$i_f(t) = i_{f0} + m_f \cdot t + q_f \cdot t^2$$

Die drei den Grundwellenstromverlauf innerhalb eines Regelungsintervalls beschreibenden Parameter sind also $i_{f0}$, $m_f$ und $q_f$

Der Grundwellenstromanteil liefert für das kurze Messintervall $I_{Kn}$ mit der laufenden Nummer $n$ folgenden Beitrag

$$1 \cdot i_{f0} + k_{Kn} \cdot m_f \cdot T_{PWM} + l_{Kn} \cdot q_f \cdot T_{PWM}^2$$

Wobei

$$k_{Kn} = \frac{2 \cdot n + 1}{4} \qquad \textbf{für} \qquad n = 0 \dots 6$$

$$l_{Kn} = \frac{1}{12}(3 \cdot n^2 + 3 \cdot n + 1 - \Delta K_K) \qquad \textbf{für} \qquad n = 0 \dots 6$$

Der Korrektur-Koeffizient $\Delta K_K$ beschreibt die Wirkung der Verteilung der konkret gewählten Filterkoeffizienten der kurzen Messintervalle auf die gemittelten Strommesswerte bei einem quadratisch verlaufenden Stromanteil. Dieser bestimmt sich ausschließlich aus der Länge $N_K$ des Filters und den Filterkoeffizienten $k_{FIRK,n}$ selbst.

$$\Delta K_K = \frac{3 \cdot N_K - 2 \cdot N_K^2 - 1}{N_K^2} + \frac{1}{N_K^2} \sum_{r=0}^{N_K-1} k_{FIRK,r}[r(6N_K - 3) - 3r^2]$$

Beispielsweise ergibt sich damit für das erste kurze Messintervall mit der Nummer $n = 0$ der Grundwellenstrom bedingte Beitrag zu

$$1 \cdot i_{f0} + \frac{1}{4} \cdot m_f \cdot T_{PWM} + \frac{1}{12}(1 - 0{,}05) \cdot q_f \cdot T_{PWM}{}^2$$

Dabei wurde für einen beispielhaft gewählten Verlauf der Filterkoeffizienten ein Wert von $\Delta K_K = 0{,}05$ ermittelt. Für ein reines Mittelwertfilter, bei dem sämtliche Koeffizienten gleich sind, würde sich $\Delta K_K = 0$ ergeben. Für das zweite kurze Messintervall mit der Nummer $n = 1$ ergibt sich der Grundwellenstrom bedingte Beitrag zu

$$1 \cdot i_{f0} + \frac{3}{4} \cdot m_f \cdot T_{PWM} + \frac{1}{12}(7 - 0{,}05) \cdot q_f \cdot T_{PWM}{}^2$$

Der Grundwellenstromanteil liefert für das lange Messintervall $I_{Lj}$ mit der laufenden Nummer $j$ folgenden Beitrag

$$1 \cdot i_{f0} + k_{Lj} \cdot m_f \cdot T_{PWM} + l_{Lj} \cdot q_f \cdot T_{PWM}{}^2$$

Wobei

$$k_{Lj} = \frac{2 \cdot j + 1}{2} \qquad \textbf{für} \qquad j = 0 \dots 2$$

$$l_{Lj} = \frac{1}{3}(3 \cdot j^2 + 3 \cdot j + 1 - \Delta K_L) \quad \textbf{für} \qquad j = 0 \dots 2$$

Der Korrektur-Koeffizient $\Delta K_L$ beschreibt die Wirkung der Verteilung der konkret gewählten Filterkoeffizienten der langen Messintervalle auf die gemittelten Strommesswerte bei einem quadratisch verlaufenden Stromanteil. Dieser bestimmt sich ausschließlich aus der Länge $N_L$ des Filters und den Filterkoeffizienten $k_{FIRL,m}$ selbst.

$$\Delta K_L = \frac{3 \cdot N_L - 2 \cdot N_L{}^2 - 1}{N_L{}^2} + \frac{1}{N_L{}^2} \sum_{r=0}^{N_L-1} k_{FIRL,r}[r(6N_L - 3) - 3r^2]$$

Beispielsweise ergibt sich damit für das erste lange Messintervall mit der Nummer $j = 0$ der grundwellenstrombedingte Beitrag zu

$$1 \cdot i_{f0} + \frac{1}{2} \cdot m_f \cdot T_{PWM} + \frac{1}{3}(1 - 0{,}03) \cdot q_f \cdot T_{PWM}{}^2$$

Dabei wurde für einen beispielhaft gewählten Verlauf der Filterkoeffizienten ein Wert von $\Delta K_L = 0{,}03$ ermittelt. Für ein reines Mittelwertfilter, bei dem sämtliche Koeffizienten gleich sind, würde sich $\Delta K_L = 0$ ergeben. Für das zweite lange Messintervall mit der Nummer $j = 1$ ergibt sich der grundwellenstrombedingte Beitrag zu

$$1 \cdot i_{f0} + \frac{3}{2} \cdot m_f \cdot T_{PWM} + \frac{1}{3}(7 - 0{,}03) \cdot q_f \cdot T_{PWM}{}^2$$

Auf gleiche Weise können so die Beiträge der Grundwellenstromparameter $i_{f0}$, $m_f$ und $q_f$ in den weiteren Messintervallen ermittelt werden. Zusammengefasst lässt sich dies bei ausschließlicher Berücksichtigung des Grundwellenstroms zunächst als lineares Gleichungssystem wie folgt darstellen.

$$
\begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \begin{pmatrix} 1 & k_{K0} & l_{K0} \\ \vdots & \vdots & \vdots \\ 1 & k_{K6} & l_{K6} \\ 1 & k_{L0} & l_{L0} \\ 1 & k_{L1} & l_{L1} \\ 1 & k_{L2} & l_{L2} \end{pmatrix} \cdot \begin{pmatrix} i_{f0} \\ m_f \cdot T_{PWM} \\ q_f \cdot T_{PWM}^2 \end{pmatrix}
$$

Für das vorliegende Ausführungsbeispiel stellt sich dies wie folgt dar

$$
\begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \begin{pmatrix} 1 & 1/4 & \frac{1}{12}(1-0{,}05) \\ 1 & 3/4 & \frac{1}{12}(7-0{,}05) \\ \vdots & \vdots & \vdots \\ 1 & k_{K6} & l_{K6} \\ 1 & 1/2 & \frac{1}{3}(1-0{,}03) \\ 1 & 3/2 & \frac{1}{3}(7-0{,}03) \\ 1 & k_{L2} & l_{L2} \end{pmatrix} \cdot \begin{pmatrix} i_{f0} \\ m_f \cdot T_{PWM} \\ q_f \cdot T_{PWM}^2 \end{pmatrix} = A \cdot \begin{pmatrix} i_{f0} \\ m_f \cdot T_{PWM} \\ q_f \cdot T_{PWM}^2 \end{pmatrix}
$$

Dieser Zusammenhang beschreibt also, wie sich die 10 gemittelten Messwerte ergeben, wenn der Grundwellenstromzeiger innerhalb des Regelungsintervalls den durch die 3 Parameter $i_{f0}$, $m_f$ und $q_f$ beschriebenen Zeitverlauf annimmt. Die Zahlenwerte der Systemmatrix A hängen von der gewählten Lage der Messintervalle innerhalb des Regelungsintervalls und dem Verlauf der Gewichtsfunktionen in den Messintervallen selbst ab. Bevor nun für jedes Regelintervall aus den jeweils 10 vorliegenden gemittelten Strommesswerten die den Grundwellenstromverlauf beschreibenden aber unbekannten Parameter $i_{f0}$, $m_f$ und $q_f$ bestimmt werden, muss das Gleichungssystem um die Beiträge des Träger- und Ripplestromverlaufs erweitert werden.

Trägerstromanteile:

Die gewählte Sequenz bzw. das Muster der überlagerten Trägerspannung weist keinen Gleichanteil auf, wodurch auch der dadurch hervorgerufene Trägerstromanteil mittelwertfrei ist. Das Muster der Trägerspannung stellt also die gewählte Abfolge von positiver bzw. negativer Trägerspannung in jedem der 8 zum Regelungsintervall gehörenden PWM-Intervallhälften dar. Durch die Wahl des Musters der Trägerspannung ist somit auch die Abfolge der linearen Anstiege bzw. Abfälle im Trägerstromverlauf bestimmt. Lediglich die Amplitude $\hat{\imath}_{SC}$ des Trägerstromverlaufs bleibt als beschreibender Parameter, der später aus den erfassten Strommittelwerten zu bestimmen ist. Es ist also zu beschreiben, welchen Beitrag die Amplitude des Trägerstromverlaufs zum erfassten Strommittelwert in jedem der Messintervalle leistet. Im vorliegenden Ausführungsbeispiel mit dem in Figur 1 gezeigten Injektionsmuster beginnt der Verlauf des Trägerstromzeigers auf Grund seiner Mittelwertfreiheit bei $+\frac{1}{2} \cdot \hat{\imath}_{SC}$ und verläuft linear bis zum Ende des ersten kurzen Messintervalls $I_{K0}$ und nimmt dort den Wert $-\frac{1}{2} \cdot \hat{\imath}_{SC}$ an. Sind wie im vorliegenden Ausführungsbeispiel die Filterkoeffizienten symmetrisch zur Mitte des Messintervalls ergibt sich bei einem linearen Stromverlauf als Beitrag zum erfassten Mittelwert der Momentanwert des Stromes zum Zeitpunkt in der Mitte des Messintervalls. Somit ergibt sich für das erste kurze Messintervall kein Beitrag des Trägerstroms zum erfassten Mittelwert $\bar{\imath}_{K0}$ Während dem zweiten Messintervall $I_{K1}$ verläuft der Trägerstrom linear vom Anfangswert $-\frac{1}{2} \cdot \hat{\imath}_{Sc}$ auf den Endwert $-\frac{3}{2} \cdot \hat{\imath}_{Sc} \cdot$ Der Beitrag zum Mittelwert $\bar{\imath}_{K1}$ beträgt somit $-1 \cdot \hat{\imath}_{Sc} \cdot$ Entsprechend ergeben sich die Beiträge des Trägerstroms zu den weiteren kurzen Messintervallen $I_{K2}$ bis $I_{K6}$ zu $-1 \cdot \hat{\imath}_{Sc}$ , $0 \cdot \hat{\imath}_{Sc}$ , $+1 \cdot \hat{\imath}_{Sc}$ , $+1 \cdot \hat{\imath}_{Sc}$ und $0 \cdot \hat{\imath}_{Sc} \cdot$ Für die langen Messintervalle $I_{L0}$ bzw. $I_{L1}$ ergeben sich die Beiträge des Trägerstroms zu den Mittelwerten $\bar{\imath}_{L0}$ bzw. $\bar{\imath}_{L1}$ zu jeweils -0,5 $-0,5 \cdot \hat{\imath}_{Sc} \cdot$ Im langen Messintervall $I_{L2}$ liegt im vorliegenden Ausführungsbeispiel folgende Besonderheit vor. Hier verläuft der Trägerstrom nicht über das gesamte Messintervall linear, sondern weist auf Grund des gewählten Injektionsmusters innerhalb des Messintervalls einen Knick auf. Aus diesem Umstand ergibt sich für einen beispielhaft gewählten Verlauf der Filterkoeffizienten ein Beitrag des Trägerstroms zum Mittelwert $\bar{\imath}_{L2}$ in Höhe von $+1,046 \cdot \hat{\imath}_{Sc} \cdot$ Wären hingegen die Filterkoeffizienten über das Messintervall konstant, würde sich ein Beitrag von $+1 \cdot \hat{\imath}_{Sc}$ ergeben. Da aber die Filterkoeffizienten zum Beginn und Ende des Messintervalls hin abnehmen, bedeutet dies für das vorliegende Messintervall, dass die kleineren Werte des Trägerstroms zu Beginn und Ende des Messintervalls mit niedriger Gewichtung, die größeren Werte des Trägerstroms hingegen mit hoher Gewichtung in den Mittelwert $\bar{\imath}_{L2}$ eingehen. Wie weit der Beitrag von $+1 \cdot \hat{\imath}_{Sc}$ abweicht, hängt vom konkret gewählten Verlauf der Filterkoeffizienten ab. Dieser Wert lässt bestimmen, indem der mit $\hat{\imath}_{Sc}$ parametrierte und vom Injektionsmuster her bekannte Verlauf des Trägerstroms mit dem Verlauf der Filterkoeffizienten multipliziert und anschließend über das Messintervall summiert wird.

$$\bar{\imath}_{L2} = \sum_{r=0}^{N_L-1} i_{Sc}\left(t = \frac{r}{N_L} \cdot T_{PWM}\right) \cdot k_{FIRL,r}$$

mit $t = 0$ zu Beginn des Messintervalls.

Die Beiträge des Trägerstromzeigers zu den erfassten Mittelwerten lassen sich zusammengefasst scheiben als

$$\begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \begin{pmatrix} 0 \\ -1 \\ -1 \\ 0 \\ 1 \\ 1 \\ 0 \\ -0,5 \\ -0,5 \\ +1,046 \end{pmatrix} \cdot (\hat{\imath}_{Sc}) = \begin{pmatrix} c_{K0} \\ \vdots \\ c_{K6} \\ c_{L0} \\ c_{L1} \\ c_{L2} \end{pmatrix} \cdot (\hat{\imath}_{Sc})$$

Ripplestromanteile:

In dem gewählten Ausführungsbeispiel wird in jedem halben PWM-Intervall einer von zwei verschiedenen Trägerspannungszeigern zur Grundwellenspannung addiert. Die Grundwellenspannung selbst bleibt über jedes Regelungsintervall mit der Dauer $T_{ctrl}$ unverändert. Demnach wird in jedem halben PWM-Intervall nur einer von zwei verschiedenen Gesamtspannungszeigern moduliert. In den jeweiligen PWM-Intervallhälften entstehen vier unterschiedliche **Stromrippleverläufe.**

- Ein erster Stromrippleverlauf tritt auf, wenn die Trägerspannung mit negativem Vorzeichen also $-\hat{u}_c$ in der ersten Hälfte eines PWM-Intervalls aufgeschaltet wird. Dies ist im vorliegenden Ausführungsbeispiel nach Figur 1 in den Intervallen $I_{K0}$ und $I_{K6}$ der Fall.
- Ein zweiter Stromrippleverlauf tritt auf, wenn die Trägerspannung mit negativem Vorzeichen also $-\hat{u}_c$ in der zweiten Hälfte eines PWM-Intervalls aufgeschaltet wird. Dies ist im vorliegenden Ausführungsbeispiel in den Intervallen $I_{K1}$ und $I_{K5}$ der Fall.
- Ein dritter Stromrippleverlauf tritt auf, wenn die Trägerspannung mit positivem Vorzeichen also $+\hat{u}_c$ in der ersten Hälfte eines PWM-Intervalls aufgeschaltet wird. Dies ist im vorliegenden Ausführungsbeispiel in den Intervallen $I_{K2}$ und $I_{K4}$ der Fall.
- Ein vierter Stromrippleverlauf tritt auf, wenn die Trägerspannung mit positivem Vorzeichen also $+\hat{u}_c$ in der zweiten Hälfte eines PWM-Intervalls aufgeschaltet wird. Dies ist im vorliegenden Ausführungsbeispiel in den Intervallen $I_{K3}$ und $I_{K7}$ der Fall.

Auf Grund der bereits erwähnten Symmetrie des Stromrippleverlaufs bei symmetrischer Pulsweitenmodulation sind die ersten und zweiten Stromrippleverläufe punktsymmetrisch zueinander. Ebenso sind auch die dritten und vierten Stromrippleverläufe punktsymmetrisch zueinander. Dies gilt auch dann, wenn die jeweiligen halben Modulationsintervalle in unterschiedlichen Modulationsintervallen liegen. Im vorliegenden Beispiel ist also der Stromrippleverlauf im Intervall $I_{K0}$ punktsymmetrisch zu den Stromrippleverläufen in den Intervallen $I_{K1}$ und $I_{K5}$. Solche punktsymmetrischen Stromrippleverläufe erzeugen in den gemittelten Messwerten der kurzen Messintervalle zueinander invertierte Beiträge, wenn die Verläufe der Filterkoeffizienten symmetrisch sind. Bezeichnet man den gemittelten Beitrag des ersten Stromrippleverlaufs zum Messwert mit $\overline{\boldsymbol{\imath}}_{RA}$, so entsteht in den Intervallen mit dem zweiten Stromrippleverlauf der gemittelte Beitrag $-\overline{\boldsymbol{\imath}}_{RA}$. Bezeichnet man den gemittelten Beitrag des dritten Stromrippleverlaufs zum Messwert mit $\overline{\boldsymbol{\imath}}_{RB}$, so entsteht in den Intervallen mit dem vierten Stromrippleverlauf der gemittelte Beitrag $-\overline{\boldsymbol{\imath}}_{RB}$. In den 7 kurzen Messintervallen $I_{K0}$ bis $I_{K6}$ entstehen somit folgende stromripplebedingten Beiträge zu den gemittelten Messwerten: $+\overline{\boldsymbol{\imath}}_{RA}$, $-\overline{\boldsymbol{\imath}}_{RA}$, $+\overline{\boldsymbol{\imath}}_{RB}$, $-\overline{\boldsymbol{\imath}}_{RB}$, $+\overline{\boldsymbol{\imath}}_{RB}$, $-\overline{\boldsymbol{\imath}}_{RA}$, $+\overline{\boldsymbol{\imath}}_{RA}$.

In den langen Messintervallen sind die gemittelten Beiträge des Stromrippleverlaufs dann Null wenn während der beiden PWM-Hälften des Messintervalls dieselbe Gesamtspannung moduliert wird. Dies ist im vorliegenden Ausführungsbeispiel in den Intervallen $I_{L0}$ und $I_{L1}$ der Fall. Im langen Messintervall $I_{L2}$ entsteht ein von Null verschiedener Stromripplebeitrag $\overline{\boldsymbol{\imath}}_{RC}$, weil in beiden zugehörigen halben PWM-Intervallen unterschiedliche Spannungen moduliert werden. Der sich in diesem langen Intervall ergebende Mittelwert der Stromripples ist jedoch nicht identisch mit der Summe der gemittelten Rippleanteile in den Intervallen $I_{K4}$ und $I_{K5}$, da die Gewichtsfunktion des Messintervalls $I_{L2}$ nicht identisch ist mit der Aneinanderreihung der Gewichtsfunktionen der Messintervalle $I_{K4}$ und $I_{K5}$.

Die Beiträge des Ripplestromverlaufs zu den erfassten Mittelwerten lassen sich zusammengefasst scheiben als

$$
\begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \begin{pmatrix} +1 & 0 & 0 \\ -1 & 0 & 0 \\ 0 & +1 & 0 \\ 0 & -1 & 0 \\ 0 & +1 & 0 \\ -1 & 0 & 0 \\ +1 & 0 & 0 \\ 0 & 0 & 0 \\ 0 & 0 & 0 \\ 0 & 0 & +1 \end{pmatrix} \cdot \begin{pmatrix} \bar{\imath}_{RA} \\ \bar{\imath}_{RB} \\ \bar{\imath}_{RC} \end{pmatrix} = \begin{pmatrix} r_{A0} & r_{B0} & 0 \\ \vdots & \vdots & \vdots \\ r_{A6} & r_{B1} & 0 \\ 0 & 0 & r_{C0} \\ 0 & 0 & r_{C1} \\ 0 & 0 & r_{C2} \end{pmatrix} \cdot \begin{pmatrix} \bar{\imath}_{RA} \\ \bar{\imath}_{RB} \\ \bar{\imath}_{RC} \end{pmatrix}
$$

Die Beiträge des Ripplestromverlaufs zu den gemittelten Messwerten lassen sich mit drei unabhängigen Parametern $\bar{\imath}_{RA}$, $\bar{\imath}_{RB}$ und $\bar{\imath}_{RC}$ beschreiben. Im Gegensatz zu den Parametern des Grundwellen- und Trägerstromverlaufs $i_{f0}$, $m_f$, $q_f$ und $\hat{\imath}_{SC}$ die bei Kenntnis derselben einen Rückschluss auf den ursprünglichen Zeitverlauf der betreffenden Stromkomponente erlauben, beschreiben die Parameter $\bar{\imath}_{RA}$, $\bar{\imath}_{RB}$ und $\bar{\imath}_{RC}$ nur noch die Wirkung auf erfassten Mittelwerte und lassen somit auch keinen Rückschluss auf den ursprünglichen Ripplestromverlauf zu.

Da die Kenntnis der Ripplestromverläufe für die Motorregelung nicht erforderlich ist, müssen diese auch nicht bestimmt werden. Dennoch müssen die Beiträge der Stromrippleverläufe zu den gemittelten Messwerten in der Beschreibung korrekt berücksichtigt werden, damit sich bei der Berechnung der interessierenden Parameter des Grundwellen- und Trägerstromverlaufs keine Verfälschungen auf Grund der vorhandenen Stromrippleverläufe ergeben.

Fasst man nun die Beiträge des Grundwellenstroms, des Trägerstroms und des Stromrippleverlaufs zu den jeweiligen Messintervallen zusammen, ergibt sich folgender linearer Zusammenhang zwischen den 7 Parametern und den 10 gemittelten Messwerten.

$$
i_m = \begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix} = \begin{pmatrix} 1 & k_{K0} & l_{K0} & r_{A0} & r_{B0} & 0 & c_{K0} \\ \vdots & \vdots & \vdots & \vdots & \vdots & \vdots & \vdots \\ 1 & k_{K6} & l_{K6} & r_{A6} & r_{B1} & 0 & c_{K6} \\ 1 & k_{L0} & l_{L0} & 0 & 0 & r_{C0} & c_{L0} \\ 1 & k_{L1} & l_{L1} & 0 & 0 & r_{C1} & c_{L1} \\ 1 & k_{L2} & l_{L2} & 0 & 0 & r_{C2} & c_{L2} \end{pmatrix} \cdot \begin{pmatrix} i_{f0} \\ m_f \cdot T_{PWM} \\ q_f \cdot T_{PWM}^2 \\ \bar{\imath}_{RA} \\ \bar{\imath}_{RB} \\ \bar{\imath}_{RC} \\ \hat{\imath}_{Sc} \end{pmatrix} = A \cdot p
$$

In jedem Regelungsintervall nimmt der Parametervektor $p$ einen neuen Wert an. Jede der 7 Komponenten, welche diesen Parametervektor $p$ bilden, ist selbst ein Stromzeiger. Die Systemmatrix A bleibt in jedem Regelungsintervall dieselbe. Jeder Eintrag dieser Matrix ist zahlenwertmäßig bekannt, sobald das Injektionsmuster der Trägerspannung und der Verlauf der Gewichtsfunktionen zur Bildung der Mittelwerte festgelegt sind.

Jeder Eintrag des Vektor des gemittelten Messwerte $i_m$ enthält einen Stromzeiger. Aus diesem Messwertvektor $i_m$ lässt sich nun bei bekannter Systemmatrix $A$ auf die 7 Parameter zurückrechnen, welche die 3 Stromanteile des Grundwellenstroms, des Trägerstroms und des Stromrippleverlaufs beschreiben.

Im vorliegenden Ausführungsbeispiel ist dieses Gleichungssystem überbestimmt, da es aus 10 Gleichungen mit 7 Unbekannten besteht. Vorteilhafterweise wird nun der Parametervektor $p_m$ so bestimmt, dass er möglichst gut zu den 10 Messwerten passt. Dies ist derjenige Parametervektor, der wenn er mit der Systemmatrix multipliziert wird denjenigen 10-komponentigen Vektor von Stromzeigern ergibt, dessen quadratischer Abstand vom Messwertvektor $i_m$ minimal ist.

Dieser Parametervektor $p_m$ kann aus dem Messwertvektor bestimmt werden, indem der Messwertvektor $i_m$ mit der pseudoinversen Matrix $A^+$ zur Systemmatrix $A$ multipliziert wird.

$$p_m = A^+ \cdot i_m$$

Wird die Systemmatrix A für das vorliegende Beispiel näher untersucht, sieht man, dass diese maximalen Rang hat. Unter dieser Bedingung lässt sich die pseudoinverse Matrix $A^+$ wie folgt berechnen:

$$A^+ = (A^*A)^{-1}A^*$$

Wobei $A^*$ die transponierte Matrix zur Matrix $A$ ist.

Die Elemente der pseudoinversen Matrix $A^+$ bestimmen sich alleinig aus der Matrix $A$ und sind somit ebenso vollständig bekannt, sobald das Injektionsmuster und die Verläufe der Gewichtungsfunktionen zur Bildung der Strommittelwerte festgelegt sind.

Die gesuchte Trägerstromamplitude ist nun unmittelbar als 7. Komponente im so aus Messwerten bestimmten Parametervektor $p_m$ enthalten. Die aus den Messwerten resultierende Amplitude des Trägerstromzeigers $\hat{i}_{cm}$ kann somit direkt als gewichtete Summe der gemessenen Strommittelwerte im zweiten Teilschritt des erfindungsgemäßen Verfahrens bestimmt werden.

$$\hat{i}_{cm} = \begin{pmatrix} h_{K0} & \cdots & h_{K6} & h_{L0} & h_{L1} & h_{L2} \end{pmatrix} \cdot \begin{pmatrix} \bar{i}_{K0} \\ \vdots \\ \bar{i}_{K6} \\ \bar{i}_{L0} \\ \bar{i}_{L1} \\ \bar{i}_{L2} \end{pmatrix} = h \cdot i_m$$

Die Gewichtungsfaktoren $h_{K0}$ bis $h_{K6}$ und $h_{L0}$ bis $h_{L2}$ können direkt der siebten Zeile der pseudoinversen Matrix wie folgt entnommen werden:

$$h_{Kn} = A^+_{7,n+1} \qquad \text{für} \qquad n = 0 \dots 6$$

$$h_{Ln} = A^+_{7,n+8} \qquad \text{für} \qquad n = 0, 1, 2$$

Auf gleiche Weise lassen sich die drei Parameter $i_{f0}$, $m_f$ und $q_f$, welche den Verlauf des Grundwellenstroms im betreffenden Regelungsintervall beschreiben als gewichtete Summe über die 10 Strommittelwerte bestimmen. Die zugehörigen Gewichte können den ersten drei Zeilen der pseudoinversen Matrix entnommen werden. Aus der Kenntnis der den Grundwellenstromverlauf beschreibenden Parameter kann der Momentanwert des Grundwellenstromzeigers für jeden beliebigen Zeitpunkt innerhalb des Regelungsintervalls bestimmt werden. In einer vorteilhaften Ausgestaltung wird nun der Grundwellenstromzeiger berechnet, der am Ende des betrachteten Regelungsintervalls vorliegt. Dieser Wert ergibt sich, indem in die Gleichung des Grundwellenstromverlaufs $t = T_{ctrl} = 4 \cdot T_{PWM}$ eingesetzt wird.

$$i_{fp} = i_f(4 \cdot T_{PWM}) = i_{f0} + 4 \cdot m_f \cdot T_{PWM} + 16 \cdot q_f \cdot T_{PWM}^2$$

Aus der Multiplikation der ersten Zeile der pseudoinversen Matrix $A^+$ mit dem Messwertvektor $i_m$ ergibt sich direkt $i_{f0}$, die Multiplikation der zweiten Zeile der pseudoinversen Matrix mit dem Messwertvektor liefert $m_f \cdot T_{PWM}$ und aus der Multiplikation der dritten Zeile der pseudoinversen Matrix mit dem Messwertvektor erhält man $q_f \cdot T_{PWM}^2$. Somit lässt sich der Wert für $i_{fp}$ bestimmen, indem die drei so ermittelten Größen $i_{f0}$, $m_f \cdot T_{PWM}$ und $q_f \cdot T_{PWM}^2$ mit den Faktoren 1, 4 und 16 multipliziert und aufsummiert werden.

Dies lässt sich aber dahingehend auf einen Rechenschritt reduzieren, dass die ersten drei Zeilen der pseudoinversen Matrix zu einer Zeile zusammengefasst werden, indem die erste Zeile mit dem Faktor 1, die zweite Zeile mit dem Faktor 4 und die dritte Zeile mit dem Faktor 16 multipliziert und summiert werden. Diese Ergebniszeile gibt somit an, mit welchen Gewichten die Komponenten des Messwertvektors zu versehen und summieren sind, um direkt den Wert für $i_{fp}$ aus dem Messwertvektor zu bestimmen.

Eine explizite Berechnung der Parameter $i_{f0}$, $\boldsymbol{m}_f$ und $\boldsymbol{q}_f$ kann somit entfallen.

$$i_{fp} = \begin{pmatrix} p_{K0} & \cdots & p_{K6} & p_{L0} & p_{L1} & p_{L2} \end{pmatrix} \cdot \begin{pmatrix} \bar{\imath}_{K0} \\ \vdots \\ \bar{\imath}_{K6} \\ \bar{\imath}_{L0} \\ \bar{\imath}_{L1} \\ \bar{\imath}_{L2} \end{pmatrix}$$

Die Gewichtungsfaktoren $p_{K0}$ bis $p_{K6}$ und $p_{L0}$ bis $p_{L2}$ können wie beschrieben aus den ersten drei Zeilen der pseudoinversen Matrix wie folgt bestimmt werden:

$$p_{Kn} = A^+_{1,n+1} + 4 \cdot A^+_{2,n+1} + 16 \cdot A^+_{3,n+1} \qquad \text{für} \qquad n = 0 \dots 6$$

$$p_{Ln} = A^+_{1,n+8} + 4 \cdot A^+_{2,n+8} + 16 \cdot A^+_{3,n+8} \qquad \text{für} \qquad n = 0, 1, 2$$

Der mit diesen Gewichten aus den gemittelten Messwerten bestimmte Wert $i_{fp}$ entspricht dem Grundwellenstrom am Ende des Regelungsintervalls, obwohl die hierfür verwendeten Messwerte bezüglich diesem Zeitpunkt in der Vergangenheit liegen. Dies ist also ein ohne Verwendung von Maschinenparametern prädiktierter Zeiger für den Grundwellenstrom. Wird dieser prädiktierte Wert $i_{fp}$ vom zeitdiskreten Stromregler als Istwert verwendet, kann dadurch die wirksame Totzeit im Stromregelkreis eliminiert werden.

Für einen zeitdiskreten Regelkreis ist besonders diejenige Totzeit störend, welche zwischen der effektiven Istwerterfassung und dem Wirksamwerden der daraus resultierenden Stellgröße besteht. Dies wirkt sich dahingehend störend aus, dass die erreichbare Regelkreisbandbreite mit zunehmender Totzeit deutlich reduziert wird.

Wird wie im erfindungsgemäßen Verfahren der vom Stromregler verwendete Istwert so berechnet, dass er dem tatsächlichen Strom am Ende des Regelungsintervalls entspricht, so fällt dies mit dem Zeitpunkt des Wirksamwerdens der vom Stromregler hieraus berechneten Grundwellenspannung für das folgende Regelungsintervall zusammen. Die wirksame Totzeit wird dadurch auf Null reduziert, und dies obwohl ausschließlich eine mittelwertbildende Messwerterfassung verwendet wird.

Diese Prädiktion auf das Ende des Regelungsintervalls wird erst durch die erfindungsgemäße Vorgehensweise ermöglicht, indem die Grundwellenspannung für das gesamte Regelungsintervall unverändert bleibt und eine geeignete Separation der Stromkomponenten erfolgt.

Mit dem beschriebenen erfindungsgemäßen Verfahren kann auch ein Wert für den Grundwellenstrom bestimmt werden, der irgend einem anderen Zeitpunkt innerhalb des jeweiligen Regelungsintervalls entspricht, sofern ein solcher für die Regelung benötigt wird.

Der für den Grundwellenstrom prädiktierte Wert $i_{fp}$ enthält prinzipbedingt keinerlei Anteile des Trägerstroms oder des Stromripples obwohl sämtliche zur Berechnung herangezogenen Mittelwerte selbst eine Überlagerung aus allen drei Stromanteilen sind. Dies wird erst durch das erfindungsgemäße Verfahren ermöglicht, indem für die aufgeschaltete Trägerspannung ein geeignetes Muster verwendet wird. Gleichzeitig ist der Grundwellenstrom als Linearkombination aus den gemittelten Messwerten zu bestimmen, wobei die Gewichtungsfaktoren entsprechend der beschriebenen erfindungsgemäßen Vorgehensweise gewählt werden.

Der so ermittelte prädiktierte Wert für den Grundwellenstrom entspricht auch dann sehr exakt dem sich am Ende des Regelungsintervalls einstellenden Grundwellenstrom, wenn dieser auf Grund von sättigenden oder nichtlinearen Induktivitäten einen gekrümmten Verlauf annimmt. Eine eventuell im auftretenden Grundwellenstromverlauf vorhandene Krümmung führt durch den in der parametrischen Beschreibung des Grundwellenstromverlaufs berücksichtigten quadratischen Term zu keiner nennenswerten Verfälschung. Wenn der auftretende Verlauf des Grundwellenstroms darüber hinaus auch kubisch verlaufende Anteile aufweist, entstehen in den berechneten Werten des Grundwellen- und Trägerstroms Verfälschungen. Dies lässt sich aber leicht dadurch beheben, dass das beschriebene Verfahren bei der parametrischen Beschreibung des Grundwellenstroms dahingehend abgewandelt wird, dass dort zusätzlich auch ein kubisch verlaufender Anteil berücksichtigt wird. Dadurch würden dann auch kubisch verlaufende Anteile im tatsächlichen Grundwellenstrom zu keiner Verfälschung der berechneten Stromkomponeneten mehr führen.

Gleichzeitig enthält auch die ermittelte Amplitude des Trägerstroms keinerlei Anteile des Grundwellenstroms oder des Stromrippleverlaufs. Dies gilt auch dann, wenn sich der Grundwellenstrom innerhalb eines betrachteten Regelungsintervalls sehr stark verändert und sogar nichtlinear verläuft. Die durch Anwendung des erfindungsgemäßen Verfahrens bestimmte Trägerstromamplitude kann also auch während sehr dynamischen Drehmomentänderungen zur drehgeberlosen Lagebestimmung herangezogen werden.

Festlegung der aufaddierten Trägersignalsequenz

Die Werte in den ersten drei Spalten der Systemmatrix **A**, welche die Beiträge der Grundwellenstromanteile beschreiben, sind grundsätzlich unabhängig von der gewählten Sequenz des aufaddierten Testsignals. Die restlichen 4 Spalten hingegen beinhalten Werte, die vom Testsignalmuster abhängig sind, da diese die Beiträge des Ripplestroms und der Trägersignalamplitude beschreiben. Damit ist die gesamte Systemmatrix **A** von der Wahl des Testsignalmusters abhängig. Somit ergibt sich für jedes mögliche Testmuster ein anderer Vektor **h**, der die Gewichte zur Bestimmung des Trägerstromdachwerts aus den gebildeten Strommittelwerten enthält. Das in der berechneten Trägerstromamplitude

$$\hat{i}_{cm} = \boldsymbol{h} \cdot \boldsymbol{i}_m$$ enthaltene Rauschen ist somit neben dem Messwertrauschen auch maßgeblich vom Vektor **h** bestimmt. Entsprechend dem erfindungsgemäßen Verfahren wird vorteilhafterweise dasjenige Testmuster gewählt, dessen zugehöriger Vektor **h** einen kleinen Betrag hat. Im vorliegenden Ausführungsbeispiel kann in jedem der acht halben PWM-Intervalle zwischen zwei verschiedenen Testsignalzeigern gewählt werden. Somit ergeben sich 256 denkbare unterschiedliche Testmuster. Für die Auswahl des tatsächlichen Testmusters werden nur diejenigen in Betracht gezogen, welche sowohl mittelfrei sind, als auch auf eine Systemmatrix **A** führen, welche maximalen Rang besitzt. Unter den dadurch verbleibenden Testmustern ergeben sich für das gewählte Ausführungsbeispiel Beträge des Vektors **h**, welche sich bis um den Faktor 5 unterscheiden.

In der Figur 3 ist dargestellt, wie die mit Hilfe des erfindungsgemäßen Verfahrens ermittelte Trägerstromamplitude verwendet wird, um eine geberlose Regelung einer Synchronmaschine zu ermöglichen. Im Ausführungsbeispiel der Figur 3 wird hierzu ein Grundwellenmodell der Maschine verwendet, das einen Schätzwert für den Rotorlagewinkel $\theta_e$ erzeugt, indem dieser aus dem Modellwert für den Rotorflusszeiger $\Psi_e$ gewonnen wird. Der Modellwert des Rotorflusszeigers $\Psi_e$ wird durch ein dem Stand der Technik entsprechendes Grundwellenflussmodell (22) erzeugt. Wegen der enthaltenen offenen Integration sind solche auf einem Grundwellenmodell der Maschine beruhenden Flussmodelle auf Grund von nicht vollständig eliminierbaren Offsets prinzipbedingt bei sehr kleiner Drehzahl und im Stillstand nicht stabil. Die daher notwendige Stabilisierung wird im erfindungsgemäßen Verfahren dadurch erreicht, dass aus dem ermittelten Dachwert der Trägerstromquerkomponente ein Referenzflusszeiger $\Psi_{rc}$ bestimmt wird. Ein Regler (23), der die Differenz zwischen dem Referenzflusszeiger $\Psi_{rc}$ und dem Modellrotorflusszeiger $\Psi_e$ gegen Null regelt, erzeugt eine Korrekturspannung, welche über die Summationsstelle (27) auf den Eingang des Statorflussintegrierers (26) wirkt.

Aus der entsprechend dem erfindungsgemäßen Verfahren erzeugten Querkomponente $\hat{i}_{cmy}$ der Trägerstromamplitude wird die geschätzte Abweichung $\tilde{\theta}_e$ der Rotorstellung von der Injektionsrichtung bestimmt. Der hierzu verwendete Faktor (31) ergibt sich aus der Linearisierung der differentiellen Änderung der Trägerstromamplitude bei einer differentiellen Rotorstellungsänderung im Arbeitspunkt mit verschwindender Querkomponente. Im vorliegenden Ausführungsbeispiel ergibt sich dieser Faktor zu

$$\frac{-L_d \cdot L_q}{T_{PWM} \cdot \hat{u}_c \cdot \Delta L}$$

mit

$$\Delta L = \frac{L_d - L_q}{2}.$$

Die Richtung $\theta_{rc}$ des Referenzflusszeigers ergibt sich aus der Addition (24) der als Injektionsrichtung verwendeten geschätzten Rotorstellung $\theta_e$ und der geschätzten Abweichung $\tilde{\theta}_e$. Für den Betrag des Referenzflusszeigers wird der bekannte Betrag des Permanentmagnetflusses $\Psi_{PM}$ verwendet.

Die erfindungsgemäße Entkopplungs- und Demodulationseinrichtung (20) erzeugt neben der Querkomponente

der Trägerstromamplitude $\hat{i}_{Cmy}$ den prädiktierten Grundwellenstromzeiger $i^e_{fp}$, welcher dem Stromregler (10) als Istwert zugeführt wird, welcher an seinem Ausgang die Grundwellenspannung erzeugt. Dieser wird an der Summationsstelle (33) die Trägerspannung aufaddiert. Der Zeitverlauf der Trägerspannungslängskomponente $u_{cx}$ ist entsprechend dem ausgewählten Injektionsmuster vorzugeben. Da die Aufschaltung der Trägerspannung stets in Richtung der geschätzten Rotorstellung $\theta_e$ erfolgt, ist die addierte Trägerspannungsquerkomponente $u_{cy}$ Null.

Das erfindungsgemäße Verfahren verwendet zur Messung des Motorstroms keine getrennten Kanäle für den Grundwellen- und Trägerstrom. Solche Verfahren separieren mit Hilfe einer Tiefpass- / Bandpass-Filterkombination aus den gemessenen Stromsignalen die Grundwellen- und Trägerstromkomponenten voneinander und führen diese getrennten AD-Wandlern zu. Nachteilig hierbei ist der erhöhte Hardwareaufwand für die Filterschaltung und die zusätzlichen AD-Wandler. Darüber hinaus ist es hiermit nicht möglich, während dynamischen Veränderungen des Grundwellenstroms ein unverfälschtes Trägerstromsignal zu separieren. Dies ist insbesondere dann von Nachteil, wenn die zu regelnde Synchronmaschine nur sehr gering ausgeprägte rotorstellungsabhängige Induktivtäten aufweist.

**Bezugszeichenliste**

Hochgestellte Auszeichnungen:

$s$ im Statorkoordinatensystem dargestellte Größe bestehend aus a- und b-Komponente
$r$ im Rotorkoordinatensystem dargestellte Größe bestehend aus d- und q-Komponente
$e$ im geschätzten (estimated) Rotorkoordinatensystem dargestellte Größe bestehend aus x- und y-Komponente
\* Sollwert
^ Amplitude der betreffenden Größe
~ Abweichung einer Größe vom tatsächlichen Wert
- zeitlich gewichteter Mittelwert einer Größe

Tiefgestellte Indizes:

$K$ ein kurzes, sich über eine halbe PWM-Periode erstreckendes Messintervall betreffend
$L$ ein langes, sich über eine ganze PWM-Periode erstreckendes Messintervall betreffend
$S$ Statorgröße, teilweise der Übersichtlichkeit halber weggelassen
$C$ Trägeranteil (carrier component)
$e$ geschätzte Größe (estimated value)
$f$ Grundwellenanteil (fundamental component)
$j$ laufende Nummer eines langen Messintervalls
$m$ gemessene Größe (measured value)
$n$ laufende Nummer eines kurzen Messintervalls
$p$ prädiktierte, d.h. auf einen zukünftigen Zeitpunkt hin berechnete Größe
$r$ Referenzgröße
$x$ Längskomponente im geschätzten Rotorkoordinatensystem
$y$ Querkomponente im geschätzten Rotorkoordinatensystem

Bezeichner:

$i$ Komponente eines Stromzeigers
**$i$** Stromzeiger, Vektor von Stromzeigern
$L$ Induktivität
$N$ Länge eines Mittelwertfilters
$m$ Anzahl der erfassten Strommittelwerte
**$p$** Parametervektor
$R$ Widerstand

S   Ansteuersignal

*u*   Komponente eines Spannungszeigers

**u**   Spannungszeiger

$\theta$   Rotorwinkel, bzw. Winkel allgemein

$\Psi$   Komponente einer Flussverkettung

$\Psi$   Flussverkettungszeiger

Formelzeichen:

**A**   Systemmatrix, welche den Zusammenhang zwischen den Parametern des modellierten Verlaufs des Motorstromzeigers innerhalb eines Injektionsintervalls und den m gebildeten Mittelwerten des Motorstromzeigers beschreibt. Jeder Element dieser Matrix ist eine skalare Größe.

$c_{Kn}$   Koeffizient mit dem die Amplitude des Trägerstromanteils im kurzen Messintervall mit der Nummer *n* enthalten ist

$c_{Lj}$   Koeffizient mit dem die Amplitude des Trägerstromanteils im langen Messintervall mit der Nummer j enthalten ist

$f_{GK}$   Verlauf der Gewichtsfunktion innerhalb der kurzen sich über ein halbes PWM-Intervall erstreckenden Messintervalle

$f_{GL}$   Verlauf der Gewichtsfunktion innerhalb der langen sich über ein ganzes PWM-Intervall erstreckenden Messintervalle

$f_{mod}$   Modulatorfrequenz des Delta-Sigma-Modulators

$h_{Kn}$   Koeffizient zur Gewichtung des Mittelwerts über das kurze Intervall mit der Nummer *n* bei der Bestimmung der Amplitude des hochfrequenten Trägerstroms

$h_{Lj}$   Koeffizient zur Gewichtung des Mittelwerts über das lange Intervall mit der Nummer *m* bei der Bestimmung der Amplitude des hochfrequenten Trägerstroms

**h**   Vektor mit den Gewichten zur Bestimmung des Trägerstromdachwerts aus den gebildeten Strommittelwerten

$\hat{i}_{Cmy}$   gemessene Querkomponente des Trägerstromspitzenwerts

$\hat{\boldsymbol{i}}_{cm}$   gemessener Zeiger des Trägerstromspitzenwerts

$\boldsymbol{i}_{fp}^{e}$   Prädiktierter Grundwellenstromzeiger im geschätzten Rotorkoordinatensystem

$i_{f}$   Grundwellenstromzeiger

$i_{fp}$   prädiktierter Grundwellenstromzeiger

$i_{f0}$   Anfangswert des Grundwellenstromzeigers innerhalb eines Regelungsintervalls

$\bar{\boldsymbol{i}}_{Kn}$   gemessener zeitlich gewichteter Mittelwert des Statorstromzeigers über das kurze Messintervall mit der Nummer *n*

$\bar{\boldsymbol{i}}_{Lj}$   gemessener zeitlich gewichteter Mittelwert des Statorstromzeigers über das lange Messintervall mit der Nummer *j*

$i_{m}$   Vektor der m innerhalb eines Injektionsintervalls gemessenen Mittelwerte des Motorstromzeigers, jede Komponente dieses Vektors ist ein zwei-komponentiger Stromzeiger

$i_{R}$   Momentanwert des Ripplestromzeigers

$\bar{\boldsymbol{i}}_{RA}$   gemittelter Wert des ersten Stromripplezeigers

$\bar{\boldsymbol{i}}_{RB}$   gemittelter Wert des zweiten Stromripplezeigers

$\bar{\boldsymbol{i}}_{RC}$   gemittelter Wert des dritten Stromripplezeigers

$\boldsymbol{i}_{S}^{e}$   Istwert des Statorstromzeigers im geschätzten Rotorkoordinatensystem

$\boldsymbol{i}_{S}^{e*}$   Sollwert des Statorstromzeigers im geschätzten Rotorkoordinatensystem

$i_{Sx}$   Längskomponente des gesamten Statorstroms im geschätzten Rotorkoordinatensystem

$i_{Sy}$   Querkomponente des gesamten Statorstroms im geschätzten Rotorkoordinatensystem

$i_{Sc}^e$      Trägeranteil des Statorstromzeigers im geschätzten Rotorkoordinatensystem

$\hat{i}_{Sc}$      Änderung des Trägerstromzeigers während einem halben PWM-Intervall$i_{Scx}$ Längskomponente des Trägerstroms im geschätzten Rotorkoordinatensystem

$i_{scy}$      Querkomponente des Trägerstroms im geschätzten Rotorkoordinatensystem

$\hat{i}_{Scx}$      Amplitude der Längskomponente des Trägerstroms im geschätzten Rotorkoordinatensystem

$\hat{i}_{Scy}$      Amplitude der Querkomponente des Trägerstroms im geschätzten Rotorkoordinatensystem

$i_{Sf}^e$      Grundwellenanteil des Statorstromzeigers im geschätzten Rotorkoordinatensystem

$i_{Sfx}$      Längskomponente des Grundwellenstroms im geschätzten Rotorkoordinatensystem

$i_{Sfy}$      Querkomponente des Grundwellenstroms im geschätzten Rotorkoordinatensystem

$i_S^s$      Istwert des Statorstromzeigers im Statorkoordinatensystem

$I_{Kn}$      kurzes Messintervall mit der Nummer $n$

$I_{Ln}$      langes Messintervall mit der Nummer $n$

$\hat{i}_{Sc}$ $\Delta K_K$      Korrektur-Koeffizient zur Berücksichtigung des Verlaufs der Filterkoeffizienten bei der Mittelwertbildung eines quadratisch verlaufenden Stromanteils über ein kurzes Messintervall

$\Delta K_L$      Korrektur-Koeffizient zur Berücksichtigung des Verlaufs der Filterkoeffizienten bei der Mittelwertbildung eines quadratisch verlaufenden Stromanteils über ein langes Messintervall

$k$      Anzahl der halben PWM-Intervalle, welche ein Injektionsintervall bilden

$k_{Kn}$      Koeffizient mit dem der lineare Anstieg des Grundwellenstromzeiger-Verlaufs im kurzen Messintervall mit der Nummer $n$ enthalten ist

$k_{Lj}$      Koeffizient mit dem der lineare Anstieg des Grundwellenstromzeiger-Verlaufs im langen Messintervall mit der Nummer $j$ enthalten ist

$k_{FIRK,r}$      Filterkoeffizient an der Position $r$ des FIR-Filters zur Bildung der Mittelwerte über eine kurzes Messintervall

$k_{FIRL,r}$      Filterkoeffizient an der Position $r$ des FIR-Filters zur Bildung der Mittelwerte über eine langes Messintervall

$l_{Kn}$      Koeffizient mit dem der quadratische Anstieg des Grundwellenstromzeiger-Verlaufs im kurzen Messintervall mit der Nummer $n$ enthalten ist

$l_{Lj}$      Koeffizient mit dem der quadratische Anstieg des Grundwellenstromzeiger-Verlaufs im langen Messintervall mit der Nummer $j$ enthalten ist

$\Delta L$      Differenzinduktivität

$L_d$      Längsinduktivität

$L_q$      Querinduktivität

$L_S$      Statorinduktivität

$m$      Anzahl der innerhalb eines Injektionsintervalls gebildeten Mittelwerte des Motorstromzeigers

$m_f$      lineare Steigung des Grundwellenstromzeigerverlaufs innerhalb eines Regelungsintervalls

$N_K$      Anzahl der FIR-Filter-Koeffizienten in einem kurzen Messintervall

$N_L$      Anzahl der FIR-Filter-Koeffizienten in einem langen Messintervall

$p$      Vektor mit den Parametern des modellierten Verlaufs des Motorstromzeigers innerhalb eines Injektionsintervalls, jede Komponente dieses Vektors ist ein zwei-komponentiger Stromzeiger

$p_m$      aus den gemittelten Stromzeigers bestimmter Parametervektor

$q_f$      Quadratischer Anteil des Grundwellenstromzeigerverlaufs innerhalb eines Regelungsintervalls

$r_{An}$      Koeffizient mit dem der erste Stromrippleanteil im kurzen Messintervall mit der Nummer $n$ enthalten ist

$r_{Bn}$      Koeffizient mit dem der zweite Stromrippleanteil im kurzen Messintervall mit der Nummer $n$ enthalten ist

$r_{Cj}$      Koeffizient mit dem der dritte Stromrippleanteil im langen Messintervall mit der Nummer $j$ enthalten ist

$R_S$      Statorwiderstand

$S_U$      pulsweitenmoduliertes Ansteuersignal für den Wechselrichterzweig U

$S_V$      pulsweitenmoduliertes Ansteuersignal für den Wechselrichterzweig V

$S_W$      pulsweitenmoduliertes Ansteuersignal für den Wechselrichterzweig W

$T(x)$      Transformations-Operation (Winkeldrehung)

$T_{ctrl}$    Periodendauer des Injektions- bzw. Regelungsintervalls

$T_{PWM}$    Periodendauer der Pulsweitenmodulation

$\hat{u}_c$    Amplitude der Trägerspannung

$u_{cx}$    Längskomponente der Trägerspannung im geschätzten Rotorkoordinatensystem

$u_{cy}$    Querkomponente der Trägerspannung im geschätzten Rotorkoordinatensystem

$\boldsymbol{u_S^{S*}}$    Sollwert des Statorspannungszeigers in Statorkoordinaten

$\overline{u}_1$    mittlerer modulierter Spannungszeiger für den ersten Wert des Trägerspannungszeigers

$\overline{u}_2$    mittlerer modulierter Spannungszeiger für den zweiten Wert des Trägerspannungszeigers

$u_{Sfx}$    Längskomponente der Grundwellenspannung im geschätzten Rotorkoordinatensystem

$u_{Sfy}$    Querkomponente der Grundwellenspannung im geschätzten Rotorkoordinatensystem

$\theta_e$    geschätzte Rotorstellung

$\tilde{\theta}_e$    geschätzte Abweichung der Injektionsrichtung von der Rotorstellung

$\theta_{rc}$    aus dem hochfrequenten Trägerstrom ermittelter Referenzwinkel für die Rotorstellung

$\omega_e$    geschätzte Winkelgeschwindigkeit

$\Psi_{PM}$    Betrag der durch die Permanentmagnete hervorgerufenen Flussverkettung

$\Psi_{rc}$    aus dem hochfrequenten Trägerstrom ermittelter Referenzflusszeiger

$\Psi_e$    geschätzter Rotorflusszeiger


Abkürzungen:

arg        Winkelbildung aus einer Zeigergröße
ctrl        Ausführung des Stromreglers
$\Delta\Sigma$        Delta-Sigma-Modulator
FPGA        Field programmable gate array
BPF        Bandpass (band pass filter)
LPF        Tiefpass (low pass filter)
PM        Permanentmagnet
PMSM        Permanentmagneterregte Synchronmaschine
PWM        Pulsweitenmodulation


Bezugszeichen:

10        Stromregler
11        Winkel- und Drehzahlschätzung aus der hochfrequenten Trägerstrominformation
20        Entkopplungs- und Demodulationseinrichtung
21        mittelwertbildende Strommesseinrichtung
22        Grundwellenflussmodell
23        PI-Regler zur Stabilisierung des Grundwellenflussmodells
24        Addition zur Bildung des Referenzwinkels aus der geschätzten Abweichung und der geschätzten Rotorstellung
25        Bildung des Referenzflusszeigers durch Transformation des Betrags der Permanentmagnetflussverkettung
26        Integrator zur Bildung des Statorflussverkettungszeigers
27        Summations- / Subtraktionsstelle zur Bildung des zum Statorflussverkettungszeiger gehörenden induzierten Spannungszeigers
28        Transformation des Motorspannungszeigers vom geschätzten ins statorfeste Koordinatensystem
29        Rücktransformation der gemittelten Strommesswertzeiger vom statorfesten ins geschätzte Koordinatensystem
30        Subtraktion zur Bildung des Zeigers der Regelabweichung des Stromreglers
31        Umrechnung des Dachwerts der Trägerstromquerkomponente in die zugehörige Winkelabweichung
32        Bildung des geschätzten Rotorwinkels aus dem Modellwert des Zeigers der Rotorflussverkettung
100        pulsweitenmodulierter Wechselrichter
101        Delta-Sigma-Modulator

102 Strommessglied

104 Zeitbasis innerhalb eines Messintervalls

105 Synchronisationssignal zum Rücksetzen der Summierer bzw. Integrierer 107 und Starten der Zeitbasis 104

106 Tabelle der Koeffizienten der Gewichtungsfunktion

107 Summierer bzw. Integrierer

110 Steuerelektronik

111 pulsweitenmodulierte Steuersignale

205 Transformation des dreiphasig dargestellten gemessenen Statorstromzeigers in zwei-komponentige kartesische Darstellung

206 Transformation des zweiphasig dargestellten gemessenen Statorstromzeigers in zwei-komponentiger kartesische Darstellung

**Patentansprüche**

1. Verfahren zum Bestimmen des Rotorwinkels einer Synchronmaschine, insbesondere unter Ausnutzung nur eines einzigen zwei- oder dreikomponentigen Strommesskanals,
**wobei die Synchronmaschine eine rotorstellungsabhängige Statorinduktivität und/oder eine in Umfangsrichtung rotorstellungsabhängig anisotrop verlaufende Statorinduktivität aufweist,**
wobei ein Wechselrichter (100) den Stator der Synchronmaschine mit einer pulsweitenmodulierten Drehspannung speist, welche für jede Hälfte einer Pulsweitenmodulationsperiode durch jeweils einen Spannungsraumzeiger kennzeichenbar ist,
wobei der Motorstrom erfasst wird und daraus ein zugehöriger Motorstromraumzeiger gebildet wird und zumindest davon abhängig der Spannungsraumzeiger zumindest für eine jeweilige Pulsweitenmodulationsperiode bestimmt wird,
wobei der Spannungsraumzeiger aus einem zu einem Grundwellenanteil zugehörigen Anteil und aus einem zu einem im Vergleich zum Grundwellenanteil höher frequenten Trägersignal zugehörigen Anteil zusammengesetzt wird,
**wobei** das Trägersignal $u_{cx}$ als periodisches Signal ausgeführt ist, dessen Periodendauer dem Vierfachen der Pulsweitenmodulationsperiode gleicht, wobei das Trägersignal $u_{cx}$ ein binäres Signal ist und/oder wobei das Trägersignal $u_{cx}$ nur einen von zwei binären Zuständen (+, -) annimmt, welcher jeweils für mindestens eine halbe Pulsweitenmodulationsperiode aufrechterhalten bleibt,
wobei das Trägersignal $u_{cx}$ ein Muster aufweist, das Mittelwert-frei ist, insbesondere bei Mittelwertbildung über die Periodendauer des Trägersignals,
wobei das Trägersignal $u_{cx}$ eindeutig kennzeichenbar ist, indem jeder Hälfte einer Pulsweitenmodulationsperiode jeweils ein Spannungswert zugeordnet ist,
**insbesondere wobei innerhalb der Periodendauer des Trägersignals $u_{cx}$ zumindest innerhalb einer Pulsweitenmodulationsperiode zwei verschiedene** Spannungswerte **zugeordnet sind,**
wobei der Grundwellenanteil des Spannungsraumzeigers während der Periodendauer des Trägersignals $u_{cx}$ konstant ist,
wobei aus den erfassten Stromwerten der dem Grundwellenanteil zugeordnete Stromanteil und der dem Trägersignal $u_{cx}$ zugeordnete Stromanteil bestimmt wird,
**wobei die erfassten Stromwerte jeweils gemittelt werden über eine Pulsweitenmodulationsperiode und auch gemittelt werden über eine jeweilige Hälfte einer Pulsweitenmodulationsperiode, wobei bei der Mittelwertbildung eine Gewichtsfunktion verwendet wird, deren zeitlicher Verlauf jeweils spiegelsymmetrisch zur Mitte desjenigen Intervalls verläuft, über welches der Mittelwert gebildet wird,**
**dadurch gekennzeichnet, dass**
**als Muster die Vorzeichenfolge, also die Folge der binären Zustände:**
**(-, -, +, +, +, -, -, +)**
**verwendet ist.**

2. Verfahren nach Anspruch 1,
**dadurch gekennzeichnet, dass**
die Periodendauer des Trägersignals dem Vierfachen der Pulsweitenmodulationsperiode gleicht
und/oder dass
das Pulsweitenmodulationsverfahren ein symmetrisches Pulsweitenmodulationsverfahren ist,
insbesondere so dass bei gleicher darzustellender Spannung in der ersten und zweiten Hälfte der Pulsweitenmodulationsperiodendauer symmetrisch zur Mitte der Pulsweitenmodulationsperiode liegende Schaltvorgänge entstehen.

3. Verfahren nach mindestens einem der vorangegangenen Ansprüche,
**dadurch gekennzeichnet, dass**
**die Gewichtsfunktion in der ersten Hälfte, insbesondere Symmetriehälfte, des Intervalls monoton ansteigt und in der zweiten Hälfte monoton abfällt.**

4. Verfahren nach mindestens einem der vorangegangenen Ansprüche,
**dadurch gekennzeichnet, dass**
das Trägersignal-Muster derart gewählt ist, dass das Signal-Rausch-Verhältnis bei der Bestimmung des Grundwellenanteils und des Trägersignals möglichst groß ist,
insbesondere wobei das Muster derart aus allen möglichen binären Mustern mit gleicher Periodendauer und gleicher Stützstellenanzahl innerhalb der Periodendauer gewählt wird, dass bei der Bestimmung der das Trägersignal und den Grundwellenanteil bestimmenden Parameter das Signal-Rausch-Verhältnis maximal ist.

5. Verfahren nach mindestens einem der vorangegangenen Ansprüche,
**dadurch gekennzeichnet, dass**
das binäre Muster in jeder Hälfte der Pulsweitenmodulationsperiodendauer einen einzigen unabhängigen Wert aufweist
und/oder dass das binäre Muster durch einen einzigen Zustandswert pro Pulsweitenmodulationsperiode eindeutig darstellbar und/oder beschrieben ist.

6. Verfahren nach mindestens einem der vorangegangenen Ansprüche,
**dadurch gekennzeichnet, dass**
zur Stromerfassung, insbesondere mit nachfolgender Mittelwertbildung, ein Delta-Sigma-Wandler verwendet wird, insbesondere welcher einen Datenstrom erzeugt, dessen zeitlicher Mittelwert mit dem Strommesswert korrespondiert und/oder dem erfassten und als Analogwert dargestellten Strommesswert entspricht.

7. Verfahren nach mindestens einem der vorangegangenen Ansprüche,
**dadurch gekennzeichnet, dass**
das Ausgangssignal des Delta-Sigma-Wandlers einem Mittel zur mit einer Gewichtsfunktion gewichteten Mittelwertbildung zugeführt wird,
wobei der Mittelwert in einem Zeitabschnitt gebildet wird, der einer Pulsweitenmodulationsperiode oder einer Hälfte einer Pulsweitenmodulationsperiode entspricht,
insbesondere wobei zu einer Pulsweitenmodulationsperiode der mit der Gewichtsfunktion gewichtete Mittelwert bestimmt wird und auch zu beiden Hälften der Pulsweitenmodulationsperiode der mit der Gewichtsfunktion gewichtete Mittelwert bestimmt wird,
insbesondere wobei aus den gewichteten Mittelwerten mittels einer linearen Operation der Grundwellenanteil und/oder der aufmodulierte Stromanteil bestimmt wird.

8. Verfahren nach mindestens einem der vorangegangenen Ansprüche,
**dadurch gekennzeichnet, dass**
ein linearer und ein quadratischer Anteil des Stromverlaufs des Grundwellenanteils berücksichtigt wird,
und/oder dass
die zeitliche Diskretisierung des Musters derart gewählt ist, dass jeder Pulsweitenmodulationsperiode oder jeder Hälfte einer Pulsweitenmodulationsperiode ein, insbesondere ein einziger, Wert des Musters zugeordnet ist,
und/oder dass
die Periodendauer des Musters ein ganzzahliges Vielfaches einer Pulsweitenmodulationsperiode oder einer Hälfte einer Pulsweitenmodulationsperiode ist.

9. Antrieb zur Durchführung eines Verfahrens nach mindestens einem der vorangegangenen Ansprüche,
wobei der Antrieb eine von einem Wechselrichter gespeiste Synchronmaschine aufweist,
**dadurch gekennzeichnet, dass**
der Motorstrom für zumindest zwei Motorphasen erfasst wird, insbesondere wobei kein Winkelsensor zur Erfassung der Winkellage des Rotors der Synchronmaschine verwendet ist,
und/oder dass
jeder Motorphase höchstens ein einziger Strommesskanal zugeordnet ist,
und/oder dass

die Mittel zur Stromerfassung einen Delta-Sigma-Wandler aufweisen.

**Claims**

1. Method for determining the rotor angle of a synchronous machine, in particular using only one single two-component or three-component current measuring channel,

   wherein the synchronous machine has a stator inductance that is dependent on the rotor position and/or a stator inductance that runs anisotropically in the circumferential direction in a manner dependent on the rotor position,

   wherein an inverter (100) feeds to the stator of the synchronous machine a pulse-width-modulated three-phase voltage, which can be identified by a respective voltage space phasor for each half of a pulse width modulation period, wherein the motor current is detected and an associated motor current space phasor is formed therefrom and, dependent at least thereon, the voltage space phasor at least for one respective pulse width modulation period is determined, wherein the voltage space phasor is composed of a component associated with a fundamental component and of a component associated with a carrier signal of higher frequency than the fundamental component,

   wherein the carrier signal $u_{cx}$ is configured as a periodic signal, the period duration of which is equal to four times the pulse width modulation period,

   wherein the carrier signal $u_{cx}$ is a binary signal and/or wherein the carrier signal $u_{cx}$ assumes only one of two binary states (+, -), which in each case is maintained for at least one half pulse width modulation period,

   wherein the carrier signal $u_{cx}$ has a pattern that is free of averages, particularly when averaging over the period duration of the carrier signal,

   wherein the carrier signal $u_{cx}$ can be clearly identified by assigning a respective voltage value to each half of a pulse width modulation period,

   in particular wherein, within the period duration of the carrier signal $u_{cx}$, two different values of voltage are assigned at least within one pulse width modulation period, wherein the fundamental component of the voltage space phasor is constant during the period duration of the carrier signal $u_{cx}$,

   wherein the current component assigned to the fundamental component and the current component assigned to the carrier signal $u_{cx}$ is determined from the detected current values, wherein the detected current values are in each case averaged over a pulse width modulation period and also are averaged over a respective half of a pulse width modulation period, wherein, for the averaging, use is made of a weighting function having a waveform over time that runs mirror-symmetrically relative to the middle of the interval over which the average is formed,

   **characterized in that**

   the sequence of signs, that is to say the sequence of binary states:

   (-, -, +, +, +, -, -,+)

   is used as the pattern.

2. Method according to claim 1,

   **characterized in that**

   the period duration of the carrier signal is equal to four times the pulse width modulation period,

   and/or **in that**

   the pulse width modulation method is a symmetrical pulse width modulation method,

   in particular such that, for the same voltage to be represented in the first and second half of the pulse width modulation period duration, switching processes occur which are symmetrical relative to the middle of the pulse width modulation period.

3. Method according to at least one of the preceding claims,

   **characterized in that**

   the weighting function increases monotonically in the first half, in particular symmetry half, of the interval and decreases monotonically in the second half.

4. Method according to at least one of the preceding claims,

   **characterized in that**

   the carrier signal pattern is selected such that the signal-to-noise ratio is as large as possible when determining the fundamental component and the carrier signal,

   in particular wherein the pattern is selected from all possible binary patterns having the same period duration and the same number of support points within the period duration such that the signal-to-noise ratio is at a maximum when determining the parameters that define the carrier signal and the fundamental component.

**5.** Method according to at least one of the preceding claims,
**characterized in that**
the binary pattern has a single independent value in each half of the pulse width modulation period duration,
and/or **in that** the binary pattern can be clearly represented and/or described by a single state value per pulse width modulation period.

**6.** Method according to at least one of the preceding claims,
**characterized in that**,
in order to detect the current, in particular with subsequent averaging, use is made of a delta-sigma converter, in particular which generates a data stream, the time average of which corresponds to the measured current value and/or matches the detected measured current value represented as an analogue value.

**7.** Method according to at least one of the preceding claims,
**characterized in that**
the output signal of the delta-sigma converter is fed to a means for averaging in a manner weighted by a weighting function,
wherein the average is formed in a time segment that corresponds to one pulse width modulation period or to one half of a pulse width modulation period,
in particular wherein the average weighted by the weighting function is determined for a pulse width modulation period and the average weighted by the weighting function is also determined for both halves of the pulse width modulation period,
in particular wherein the fundamental component and/or the modulated current component is determined from the weighted averages by means of a linear operation.

**8.** Method according to at least one of the preceding claims,
**characterized in that**
a linear and a square component of the current waveform of the fundamental component is taken into account,
and/or **in that**
the temporal discretization of the pattern is selected such that each pulse width modulation period or each half of a pulse width modulation period is assigned a value, in particular one single value, of the pattern,
and/or **in that**
the period duration of the pattern is an integer multiple of one pulse width modulation period or of one half of a pulse width modulation period.

**9.** Drive for carrying out a method according to at least one of the preceding claims,
wherein the drive comprises a synchronous machine that is powered by an inverter,
**characterized in that**
the motor current is detected for at least two motor phases, in particular wherein no angle sensor is used to detect the angle position of the rotor of the synchronous machine,
and/or **in that**
each motor phase is assigned at most one single current measuring channel,
and/or **in that**
the means for detecting current comprise a delta-sigma converter.

**Revendications**

**1.** Procédé pour déterminer l'angle de rotor d'une machine synchrone, en particulier en utilisant un seul canal de mesure de courant à deux ou trois composantes, sachant que la machine synchrone présente une inductance statorique fonction de la position du rotor et/ou une inductance statorique évoluant de manière anisotrope en direction circonférentielle en fonction de la position du rotor,
sachant qu'un onduleur (100) alimente le stator de la machine synchrone avec une tension triphasée à modulation de largeur d'impulsions, dont chaque demi-période de modulation de largeur d'impulsions peut être **caractérisée par** un vecteur spatial de tension respectif,
sachant qu'on détecte le courant moteur, à partir de quoi l'on forme un vecteur spatial de courant moteur correspondant, et l'on détermine au moins en fonction de ce dernier le vecteur spatial de tension au moins pour une période respective de modulation de largeur d'impulsions,
sachant que le vecteur spatial de tension se compose d'une composante correspondant à une composante d'onde fondamentale et d'une composante correspondant à un signal porteur de fréquence plus élevée que la composante d'onde fondamentale,

sachant que le signal porteur $u_{cx}$ est réalisé sous forme de signal périodique, dont la durée de période est égale au quadruple de la période de modulation de largeur d'impulsions,

sachant que le signal porteur $u_{cx}$ est un signal binaire et/ou sachant que le signal porteur $u_{cx}$ prend uniquement l'un de deux états binaires (+,-), qui est chaque fois conservé pour au moins une demi-période de modulation de largeur d'impulsions,

sachant que le signal porteur $u_{cx}$ présente un modèle à valeur moyenne nulle, en particulier lorsque la valeur moyenne est formée sur la durée de période du signal porteur,

sachant que le signal porteur $u_{cx}$ peut être caractérisé de manière univoque par le fait qu'une valeur de tension respective est associée à chaque demi-période de modulation de largeur d'impulsions,

sachant en particulier qu'à l'intérieur de la durée de période du signal porteur $u_{cx}$, au moins deux valeurs de tension différents sont associés à l'intérieur d'une période de modulation de largeur d'impulsions,

sachant que la composante d'onde fondamentale du vecteur spatial de tension est constante pendant la durée de période du signal porteur $u_{cx}$,

sachant qu'on détermine à partir des valeurs de courant détectées la composante de courant correspondant à la composante d'onde fondamentale et la composante de courant correspondant au signal porteur $u_{cx}$,

sachant qu'on forme les moyennes respectives des valeurs de courant détectées sur une période de modulation de largeur d'impulsions ainsi que sur une demi-période respective de modulation de largeur d'impulsions, sachant qu'on utilise pour la formation de la valeur moyenne une fonction de pondération dont l'allure dans le temps s'étend respectivement symétriquement par rapport au milieu de l'intervalle sur lequel la valeur moyenne est formée,

**caractérisé en ce qu'**on utilise comme modèle la succession de signes algébriques suivante, donc la succession d'états binaires suivante : (-,-,+,+,+,-,-,+).

2. Procédé selon la revendication 1, **caractérisé en ce que** la durée de période du signal porteur est égale au quadruple de la période de modulation de largeur d'impulsions, et/ou **en ce que** le procédé de modulation de largeur d'impulsions est un procédé de modulation de largeur d'impulsions symétrique,

en particulier de telle sorte que, pour une même tension à représenter, des processus de commutation situés symétriquement par rapport au milieu de la période de modulation de largeur d'impulsions sont obtenus dans la première et dans la deuxième moitié de la durée de période de modulation de largeur d'impulsions.

3. Procédé selon au moins une des revendications précédentes, **caractérisé en ce que** la fonction de pondération est une fonction croissante monotone dans la première moitié de l'intervalle, en particulier la moitié symétrique, et une fonction décroissante monotone dans la deuxième moitié.

4. Procédé selon au moins une des revendications précédentes, **caractérisé en ce que** le modèle de signal porteur est choisi de telle sorte que le rapport signal-bruit lors de la détermination de la composante d'onde fondamentale et du signal porteur est le plus grand possible, sachant en particulier que le modèle est choisi, parmi tous les modèles binaires possibles de même durée de période et de même nombre de points d'appui à l'intérieur de la durée de période, de telle sorte que le rapport signal-bruit lors de la détermination des paramètres déterminant le signal porteur et la composante d'onde fondamentale est maximal.

5. Procédé selon au moins une des revendications précédentes, **caractérisé en ce que** le modèle binaire présente une unique valeur indépendante dans chaque moitié de la durée de période de modulation de largeur d'impulsions, et/ou **en ce que** le modèle binaire peut être représenté et/ou est décrit de manière univoque par une unique valeur d'état par période de modulation de largeur d'impulsions.

6. Procédé selon au moins une des revendications précédentes, **caractérisé en ce qu'**afin de détecter le courant, en particulier avec formation consécutive de valeur moyenne, on utilise un convertisseur delta-sigma, en particulier qui produit un flux de données dont la valeur moyenne dans le temps correspond à la valeur de mesure du courant et/ou à la valeur de mesure de courant détectée et représentée sous forme de valeur analogique.

7. Procédé selon au moins une des revendications précédentes, **caractérisé en ce que** le signal de sortie du convertisseur delta-sigma est apporté à un moyen pour la formation de valeur moyenne pondérée par une fonction de pondération,

sachant que la valeur moyenne est formée dans un intervalle de temps qui correspond à une période de modulation de largeur d'impulsions ou à une moitié d'une période de modulation de largeur d'impulsions,

sachant en particulier qu'on détermine pour une période de modulation de largeur d'impulsions la valeur moyenne pondérée avec la fonction de pondération, et qu'on détermine également pour les deux moitiés de la période de modulation de largeur d'impulsions la valeur moyenne pondérée avec la fonction de pondération,
sachant en particulier qu'on détermine à partir des valeurs moyennes pondérées, au moyen d'une opération linéaire, la composante d'onde fondamentale et/ou la composante de courant modulée.

8. Procédé selon au moins une des revendications précédentes, **caractérisé en ce qu'**on tient compte d'une composante linéaire et d'une composante quadratique de l'allure de courant de la composante d'onde fondamentale,
et/ou **en ce que** la discrétisation du modèle dans le temps est choisie de telle sorte qu'une, en particulier une unique valeur du modèle est associée à chaque période de modulation de largeur d'impulsions ou à chaque moitié d'une période de modulation de largeur d'impulsions,
et/ou **en ce que** la durée de période du modèle est un multiple entier d'une période de modulation de largeur d'impulsions ou d'une moitié d'une période de modulation de largeur d'impulsions.

9. Système d'entraînement pour la mise en oeuvre d'un procédé selon au moins une des revendications précédentes, sachant que le système d'entraînement présente une machine synchrone alimentée par un onduleur,
**caractérisé en ce qu'**on détecte le courant du moteur pour au moins deux phases du moteur, sachant en particulier qu'on n'utilise pas de capteur d'angle pour détecter la position angulaire du rotor de la machine synchrone,
et/ou **en ce qu'**un unique canal de mesure de courant au maximum est associé à chaque phase du moteur, et/ou **en ce que** les moyens pour détecter le courant présentent un convertisseur delta-sigma.

Fig. 1

Fig. 2

Fig. 3

EP 2 756 595 B1

Fig. 4

EP 2 756 595 B1

Fig. 5

EP 2 756 595 B1

Fig. 6

Fig. 7

Stand der Technik

EP 2 756 595 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20060091845 A1
- DE 10226974 A1

### In der Beschreibung aufgeführte Nicht-Patentliteratur

- Position sensorless control of PMSM by synchronous injection and demodulation of alternating carrier voltage. **WOLFGANG HAMMEL et al.** SENSORLESS CONTROL FOR ELECTRICAL DRIVES (SLED), 2010 FIRST SYMPOSIUM ON. IEEE, 09. Juli 2010, 56-63
- High-resolution sensorless position estimation using delta-sigma-modulated current measurement. **WOLFGANG HAMMEL et al.** ENERGY CONVERSION CONGRESS AND EXPOSITION (ECCE), 2011 IEEE. IEEE, 17. September 2011, 2717-2714
- Regular-sampled current measurement in AC drives using delta-sigma modulators. **WILHERLM PETERS et al.** 13TH EUROPEAN CONFERENCE ON POWER ELECTRONICS AND APPLICATIONS, 2009: EPE'09; 8 - 10SEPT. 2009 BARCELONA, SPAIN. IEEE, 08. September 2009, 1-9
- **A. CONSOLI ; A. GAETA ; G. SCARCELLA ; G. SCELBA ; A. TESTA.** Optimization of Transient Operations in Sensorless Control Techniques Based on Carrier Signal Injection. *Proc. IEEE Energy Conversion Congress and Exposition,* 20. September 2009, 2115-2122
- **S.C. DUTTA ROY.** Impulse Response of sincN FIR Filters. *IEEE Transactions on Circuits and Systems-II: Express Briefs,* Marz 2006, vol. 53 (3), 217-219